# EUROPEAN PATENT SPECIFICATION

(11) **EP 4 184 283 B1**
(45) Date of publication and mention of the grant of the patent: **19.11.2025**
(21) Application number: 21856054.8
(22) Date of filing: 23.06.2021
(51) Int. Cl.: G06F 1/16, G06F 3/14, G09F 9/30, H04M 1/02

(54) **ELECTRONIC DEVICE COMPRISING HINGE MODULE**
ELEKTRONISCHE VORRICHTUNG MIT SCHARNIERMODUL
DISPOSITIF ÉLECTRONIQUE COMPRENANT UN MODULE CHARNIÈRE

(30) Priority: 10.08.2020 KR 20200100097
(43) Date of publication of application: 24.05.2023
(73) Proprietor: Samsung Electronics Co., Ltd., Suwon-si, Gyeonggi-do 16677 (KR)
(72) Inventor: KIM, Jongkeun, Suwon-si Gyeonggi-do 16677 (KR); KIM, Jongyoon, Suwon-si Gyeonggi-do 16677 (KR)
(74) Representative: Gulde & Partner
(86) International application number: PCT/KR2021/007918
(87) International publication number: WO 2022/035047

(56) References cited:
- KR-A- 20180 040 482
- KR-A- 20200 026 644
- KR-A- 20200 054 259
- KR-A- 20200 073 686
- KR-B1- 102 036 913

## Description

### [Technical Field]

Various embodiments of the disclosure relate to an electronic device including a hinge module.

### [Background Art]

With the development of information and communication technology and semiconductor technology, various functions are being integrated into one portable electronic device. For example, an electronic device may implement not only communication functions but also entertainment functions, such as playing games, multimedia functions, such as playing music and videos, communication and security functions for mobile banking, and scheduling and e-wallet functions. Such electronic devices become compact enough for users to carry in a convenient way.

As mobile communication services extend up to multimedia service sectors, electronic devices require a larger display to allow users satisfactory use of multimedia services as well as voice call or text messaging services. This, however, trades off the trend of electronic devices being compact.

KR 2020 0073686 A relates to a foldable electronic device including a hinge structure linked to a first rotational support part and a second rotational support part and formed therein with a recess to receive at least a portion of a third part, when the angle between a first surface and a third surface is equal to or less than a specified first angle.

KR 2020 0026644 A relates to an enfolding type hinge structure in which a flexible display panel is installed, wherein while a pair of panels in which a flexible display panel made of a bent material displaying an image such as a video or the like is folded or unfolded, a stable folding operation with respect to a folding portion can be performed.

### [Detailed Description of the Invention]

### [Technical Problem]

An electronic device (e.g., a portable terminal) includes a display with a flat surface or both a flat and curved surface. An electronic device including a display may have a limitation in realizing a screen larger than the size of the electronic device due to the fixed display structure. Accordingly, research has been conducted on electronic devices including a foldable or rollable display.

When the electronic device is folded, the display and the housing have different curvatures depending on the thickness of the electronic device, so that movement (e.g., slide in the width direction) of components of the electronic device may be required. In a case where the housing is slid when the electronic device is folded, the substantial mounting space of the electronic device may be reduced because it may include a structure for sliding the housing. In a case where the display is slid when the electronic device is folded, the sliding portion may be visually exposed to the outside of the electronic device, deteriorating the aesthetic feel of the electronic device. Further, a foldable electronic device having structures which may slide with respect to each other may have relatively lower stability than electronic devices having fixed structures.

According to various embodiments of the disclosure, there is provided a display that may be unfolded or folded by the user's manipulation.

According to various embodiments of the disclosure, there is provided an electronic device capable of stably maintaining the folded state or unfolded state of the display.

According to various embodiments of the disclosure, there is provided an electronic device including a display that is rotated about the rotational axis of the housing.

The disclosure is not limited to the foregoing embodiments but various modifications or changes may rather be made thereto without departing from the scope of the disclosure.

### [Technical Solution]

The invention is set out in the appended set of claims.

According to the invention, an electronic device is defined in appended claim 1.

### [Advantageous Effects]

According to the invention, the electronic device may exclude the slide structure in the width direction of the housing by using the rotation bracket that is moved along the curved rail guide of the hinge cover. As the slide structure in the width direction of the housing is excluded, the electronic device may be downsized or may have an increased mounting space therein.

According to the invention, the housing of the electronic device may be rotated about the rotational axis aligned with the rotational axis of the display, suppressing or reducing a slide in the planar direction of the housing, and reducing twist of the electronic device while enhancing the durability of the electronic device.

### [Brief Description of the Drawings]

FIG. 1 is a view illustrating an unfolded state of an electronic device according to various embodiments of the disclosure.
FIG. 2 is a view illustrating a folded state of an electronic device according to various embodiments of the disclosure.
FIG. 3 is a perspective view illustrating an electronic device according to various embodiments of the disclosure;
FIG. 4 is a view illustrating a connected structure of a first housing and a second housing in an electronic device according to various embodiments of the disclosure;
FIGS. 5A and 5B are views illustrating a structure in which a hinge module is disposed in an electronic device according to various embodiments of the disclosure;
FIG. 6 is a view schematically illustrating a folding of a display according to various embodiments of the disclosure;
FIG. 7 is a view illustrating a folding of a housing according to various embodiments of the disclosure;
FIG. 8 is an enlarged view of the first rotation portion of FIG. 5B;
FIG. 9 is a side view illustrating a hinge cover and a first rotation portion according to various embodiments of the disclosure;
FIGS. 10A, 10B, and 10C are views illustrating operations of a first rotation portion according to various embodiments of the disclosure;
FIG. 11 is a cross-sectional, perspective view taken along plane AA' of FIG. 8;
FIG. 12A is a perspective view illustrating a hinge cover according to various embodiments of the disclosure;
FIG. 12B is a plan view illustrating a hinge cover according to various embodiments of the disclosure;
FIG. 13 is a perspective view illustrating a first rotation bracket according to various embodiments of the disclosure;
FIG. 14 is a perspective view illustrating a multi-bar assembly according to various embodiments of the disclosure;
FIG. 15 is an exploded perspective view illustrating a multi-bar assembly according to various embodiments of the disclosure;
FIG. 16A is a side view illustrating a hinge cover, a first rotation portion, and a multi-bar assembly in an unfolded state according to various embodiments of the disclosure;
FIG. 16B is a side view illustrating a hinge cover, a first rotation portion, and a multi-bar assembly in a folded state according to various embodiments of the disclosure;
FIG. 17 is a front view illustrating an electronic device according to various embodiments of the disclosure;
FIG. 18 is a view schematically illustrating a folding of an electronic device according to various embodiments of the disclosure;
FIG. 19 is a front view illustrating an electronic device except for a display according to various embodiments of the disclosure;
FIG. 20 is a side view illustrating an electronic device according to various embodiments of the disclosure;
FIG. 21 is an exploded perspective view illustrating a portion of a hinge module according to various embodiments of the disclosure;
FIG. 22 is a side view illustrating a first hinge arm according to various embodiments of the disclosure;
FIG. 23 is a side view illustrating a first mounting member according to various embodiments of the disclosure;
FIG. 24 is a view illustrating operations of a second rotation portion according to various embodiments of the disclosure;
FIG. 25 is a front view illustrating a resistance portion according to various embodiments of the disclosure;
FIG. 26 is a view illustrating an arrangement structure of cam members in an electronic device according to various embodiments of the disclosure;
FIG. 27 is a perspective view of the hinge module taken along line 'CA' of FIG. 19;
FIG. 28 is a view of the hinge module taken along line 'CB' of FIG. 19;
FIG. 29 is a perspective view of the hinge module taken along line 'CC' of FIG. 19;
FIG. 30 is a view of the hinge module taken along line 'CD' of FIG. 19;
FIG. 31 is a perspective view of the hinge module taken along line 'CE' of FIG. 19;
FIG. 32 is an enlarged view of portion 'S3' of FIG. 31;
FIG. 33 is a perspective view illustrating a hinge module taken along line 'CA' of FIG. 19, in an operation in which an electronic device and/or a hinge module folds according to various embodiments of the disclosure;
FIG. 34 is a perspective view illustrating a hinge module taken along line 'CC' of FIG. 19, in an operation in which an electronic device and/or a hinge module folds according to various embodiments of the disclosure;
FIG. 35 is a perspective view illustrating a hinge module taken along line 'CA' of FIG. 19, in a folded state of an electronic device and/or a hinge module according to various embodiments of the disclosure;
FIG. 36 is a perspective view illustrating a hinge module taken along line 'CC' of FIG. 19, in a folded state of an electronic device and/or a hinge module according to various embodiments of the disclosure;
FIG. 37 is a perspective view illustrating a hinge module taken along line 'CD' of FIG. 19, in a folded position of an electronic device and/or a hinge module according to various embodiments of the disclosure; and
FIG. 38 is a perspective view illustrating a hinge module taken along line 'CE' of FIG. 19, in a folded position of an electronic device and/or a hinge module according to various embodiments of the disclosure.

### [Mode for Carrying out the Invention]

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

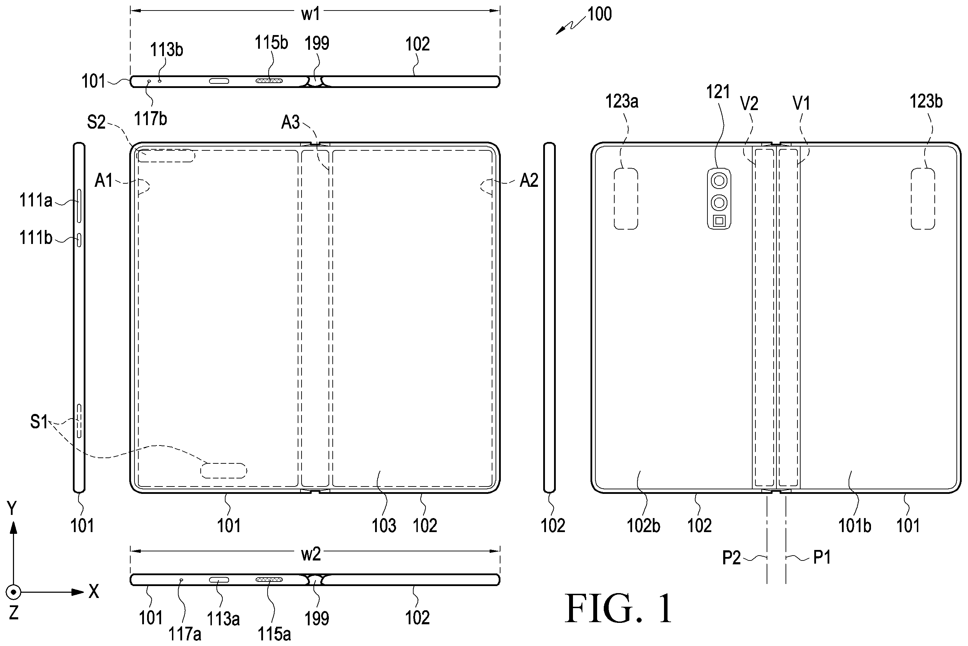

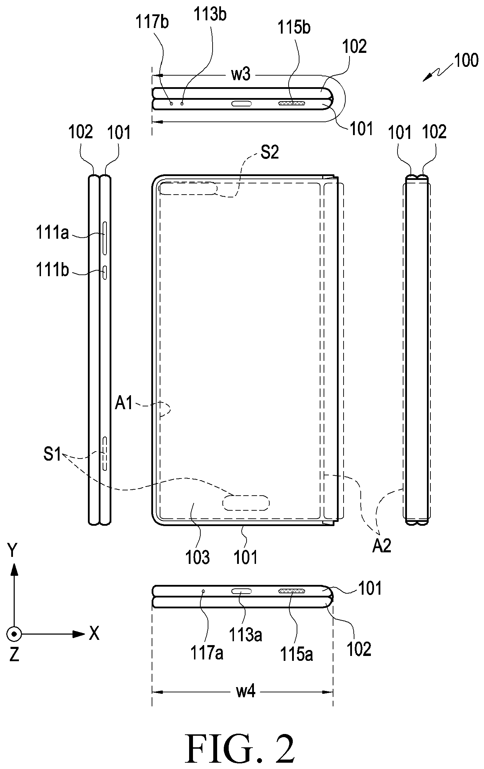

FIG. 1 is a view illustrating an unfolded state of an electronic device according to various embodiments of the disclosure. FIG. 2 is a view illustrating a folded state of an electronic device according to various embodiments of the disclosure.

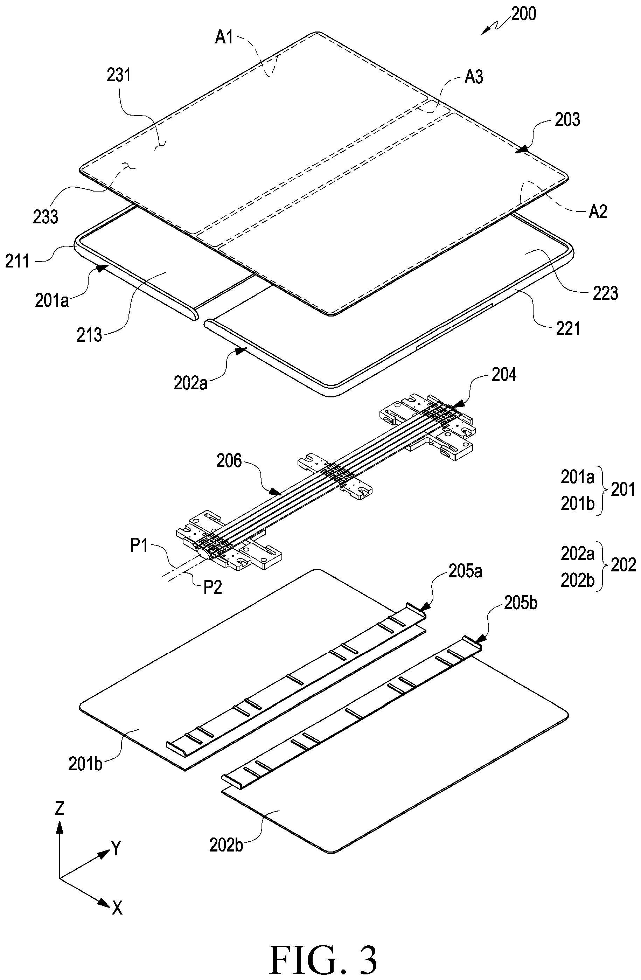

In describing various embodiments of the disclosure, a pair of housings (e.g., a first housing 101 and a second housing 102) are rotatably coupled to a hinge module (e.g., the hinge module 204 in FIG. 3). However, it should be noted that the electronic device 100 according to various embodiments of the disclosure is not limited thereto. For example, according to an embodiment, the electronic device 100 may include a plurality of housings. As used herein, a "pair of housing structures" may mean two rotatably-coupled housings among the plurality of housings.

In the following detailed description, "+X/-X-axis direction", "+Y/-Y direction" or "+Z/-Z direction" may be mentioned, and it should be noted that it is described based on the width direction (X-axis direction), the length direction (Y-axis direction), or the thickness direction (Z-axis direction) of the first housing 101 in FIG. 1 or 2. For example, various changes may be made to the above definitions according to embodiments or when another structure of the electronic device 100 is set as the reference. Further, in the following detailed description, 'front surface' or 'rear surface' may be mentioned for the electronic device 100 or the housings 101 and 102 and, regardless of the relative positions (e.g., unfolded state or folded state) of the housings 101 and 102, the surface where the foldable display 103 of FIG. 1 is disposed may be defined as the front surface of the electronic device 100 (or housings 101 and 102), and the surface opposite to the surface where the foldable display 103 is disposed may be defined as the rear surface of the electronic device 100 (or housings 101 and 102).

Referring to FIGS. 1 and 2, the electronic device 100 may include a pair of housings 101 and 102, a foldable display 103, and a hinge module (e.g., the hinge module 204 of FIG. 3) that rotatably couple the housings 101 and 102. The electronic device 100 may further include a hinge cover(s) 199 disposed at the top and/or the bottom. The hinge cover(s) 199 may be disposed substantially between the first housing 101 and the second housing 102, and may be prevented from being visually exposed to the outside. In another embodiment, the hinge cover(s) 199 may isolate the internal space of the electronic device 100 from the external space. In some embodiments, the hinge cover(s) 199 may be visually exposed to the outside when the electronic device 100 is in the unfolded state, and may be visually concealed when the electronic device 100 is in the folded state.

According to an embodiment, as illustrated in FIG. 1, when the electronic device 100 (e.g., the first housing 101 and the second housing 102) is in the unfolded state, the flexible display 103 may output a screen through its entire area substantially in one direction, e.g., +Z direction. As illustrated in FIG. 2, when the electronic device 100 is in the folded state, a first display area A1 of the flexible display 103 may be disposed to face in the +Z direction, and a second display area A2 of the flexible display 103 may be disposed to face in the -Z direction. For example, the foldable display 103 may include areas (e.g., first display area A1 and second display area A2) disposed to face away from each other in the folded state of the electronic device 100. For example, the first housing 101 and the second housing 102 may rotate between a position in which they are stretched out side-by-side and a position in which they are folded to face each other. According to an embodiment, the foldable display 103 may include a folding area A3, and in the folded state of the electronic device 100, the folding area A3 may be disposed substantially in the +X direction. For example, in the state in which the first housing 101 and the second housing 102 are folded to face each other, the foldable display 103 may be visually exposed to the outside.

According to an embodiment, the first housing 101 and/or the second housing 102 may accommodate the foldable display 103 in the front surface and include rear plates 101b and 102b (e.g., the first rear plate 201b and second rear plate 202b of FIG. 3) disposed on the rear surface. The electronic device 100 may include a plurality of electric components, e.g., a circuit board, various sensor modules, a battery, an audio input/output module, a camera module, a haptic module, an antenna, and/or a connection terminal, disposed in the space between the foldable display 103 and the rear plates 101b and 102b. The first housing 101 may be coupled to the hinge module 204 to rotate about the first rotational axis P1. The second housing 102 may be coupled to the hinge module 204 to rotate about the second rotational axis P2. According to an embodiment, the first housing 101 and the second housing 102 may be disposed to be substantially symmetrical to each other with respect to the hinge module 204. According to an embodiment, when the first housing 101 rotates about the hinge module 204, the second housing 204 may rotate in the reverse direction of the first housing 101, allowing the electronic device to fold or unfold.

According to various embodiments, the foldable display 103 may include a first display area A1 disposed on a surface of the first housing 101, the folding area A3 disposed corresponding to the hinge module 204, and/or a second display area A2 disposed on one surface of the second housing 102. For example, the foldable display 103 may extend from one surface of the first housing 101 through the area where the hinge module 204 is disposed to one surface of the second housing 102. Substantially, the first display area A1 may be positioned on the first housing 101, and the second display area A2 may be positioned on the second housing 102. The folding area A3 may be supported by a multi-bar assembly (e.g., the multi-bar assembly 206 of FIG. 3). For example, the multi-bar assembly 206 may be disposed between the first housing 101 and the second housing 102 on the front surface of the electronic device 100, supporting the foldable display 103 (e.g., the folding area A3). According to an embodiment, the foldable display 103 may output a screen through substantially the entire area of the front surface of the electronic device 100.

According to various embodiments, when measured from a side surface of the first housing 101 through the position where of the hinge module 204 is disposed to a side surface of the second housing 102, along the X-axis direction in the unfolded state, the length (e.g., first length W1) of the front surface (e.g., the flexible display 103) of the electronic device 100 and the length (e.g., second length W2) of the rear surface of the electronic device 100 may be substantially the same. When measured from a side surface of the first housing 101 through the position where of the hinge module 204 is disposed to a side surface of the second housing 102, along the X-axis direction in the folded state, the length (e.g., third length W3) of the front surface (e.g., the flexible display 103) of the electronic device 100 may be larger than the length (e.g., twice the fourth length W4) of the rear surface of the electronic device 100. Since the first display area A1 and the second display area A2 of the foldable display 103 are fixed to the first housing 101 and the second housing 102, and the width measured along the X direction is not substantially variable in the foldable display 103, the width measured along the X direction on the rear surface of the electronic device 100 may be varied. For example, a variation in the width measured along the X direction on the rear surface of the electronic device 100 may be implemented as a portion of the rear surface (e.g., the area indicated with 'V1' and/or 'V2') of the electronic device 100 is contracted or expanded. According to another embodiment, the variation in the width measured along the X direction on the rear surface of the electronic device 100 may be implemented as the first housing 101 and/or the second housing 102 slides on the hinge module 204. According to another embodiment, as the first housing 101 and/or the second housing 102 slides on the hinge module 204, and the area indicated with 'V1' and/or 'V2' is contracted or expanded on the rear surface of the electronic device 100, corresponding to the slide of the first housing 101 and/or the second housing 102, the width measured along the X direction may be varied.

According to various embodiments, the change in the length of the rear surface of the electronic device 100 according to the unfolding or folding may be varied depending on the interval between the first rotational axis P1 and the second rotational axis P2 and/or the relative positions of the first rotational axis P1 and the second rotational axis P2 with respect to the flexible display 103. According to an embodiment, the variation in the length of the rear surface of the electronic device 100 according to the folding or unfolding may be proportional to the interval between the foldable display 103 and the rear surface of the electronic device 100. For example, as the thickness of the electronic device 100, measured in the Z direction increases, the variation in the length of the rear surface of the electronic device 100 according to folding or unfolding may increase.

According to an embodiment, the electronic device 100, e.g., the first housing 101 and/or the second housing 102, may include at least one sensor area S1 and S2 where at least one sensor module is provided. For example, the electronic device 100 may include a first sensor area S1 provided on the front surface or side surface of the first housing 101 and/or a second sensor area S2 provided on the front surface. For example, a fingerprint recognition sensor may be disposed in the first sensor area S1. The fingerprint recognition sensor may include, e.g., an optical fingerprint recognition sensor or an ultrasonic fingerprint recognition sensor and may be disposed on a side surface of the first housing 101 (or the second housing 102) or inside the foldable display 103. The electronic device 100 may include a sensor module provided in the second sensor area S2, e.g., a camera module, a proximity sensor, an illuminance sensor, an iris recognition sensor, an ultrasonic sensor, or an indicator. The sensor module(s) in the second sensor area S2 may be disposed inside the foldable display 103.

According to an embodiment, the electronic device 100 may include a notch portion protruding from the second sensor area S2 to the first display area A1 of the foldable display 103. The notch portion may be a structure forming the first housing 101 (or the second housing 102), and at least part of the sensor modules may be disposed in the notch portion. The notch portion may have a polygonal shape, a circular shape, or an elliptical shape. In another embodiment, in the second sensor area S2, the foldable display 103 may include a transparent area that permits external light to enter the inside. For example, among the sensor modules, an optical sensor, such as a camera module or a proximity sensor, may be disposed corresponding to the transparent area of the foldable display 103. According to an embodiment, the flexible display 103 may include a recess corresponding to the notch portion. For example, a portion (e.g., second sensor area S2) of the flexible display 103 corresponding to the notch portion may be removed.

According to an embodiment, the electronic device 100 (e.g., the sensor areas S1 and S2 or the sensor module) is not limited to the above-described configuration, and may include an additional sensor area or additional sensor module according to the function equipped in the electronic device 100 or the function of each sensor module. According to an embodiment, the electronic device 100 may not include some of the above-mentioned sensor modules.

According to an embodiment, the electronic device 100 may include a camera module 121 disposed on the rear surface (e.g., the rear surface of the second housing 102). According to an embodiment, the camera module may be interpreted as one of the sensor modules and may include a plurality of cameras, at least one infrared (IR) projector, at least one IR receiver, or a flash. The user may capture the object using the camera module 121 provided on the rear surface of the electronic device 100 (e.g., the second housing 102). According to an embodiment, the camera module 121 may be disposed in different positions, e.g., the position indicated with reference numeral '123a' or '123b' and the electronic device 100 may further include an additional camera module or sensor module in a position different from the position indicated in FIG. 1.

According to an embodiment, the electronic device 100 may include at least one key input device 111a and 111b disposed on a side surface of the first housing 101 (and/or the second housing 102). The key input devices 111a and 111b may include, e.g., a volume control key 111a and/or a power key 111b and, according to an embodiment, the key input devices 111a and 111b shown may be omitted, or an additional key input device may be provided. In some embodiments, the electronic device 100 may further include a soft key provided through the flexible display 103.

According to an embodiment, the electronic device 100 may include at least one connector hole 113a and 113b formed on a side surface of the electronic device 100 (e.g., a side, top, and/or bottom surface of the first housing 101 and/or the second housing 102) The connector holes 113a and 113b may include, e.g., a first connector hole 113a for charging/data cable connection and a second connector hole 113b for audio device (e.g., earphone) connection. According to an embodiment, the data cable may mean a cable provided to an audio device. For example, the electronic device 100 may not include the second connector hole 113b and connect to the audio device via the first connector hole 113a. According to an embodiment, the electronic device 100 may not include the connector holes 113a and 113b. For example, the electronic device 100 may connect to another electronic device 100 or an additional device, e.g., an earphone, wirelessly, by including a function, such as wireless charging, Bluetooth communication, wireless fidelity (Wi-Fi) direct, or infrared data association (IrDA).

According to an embodiment, the electronic device 100 may include a plurality of audio output holes 115a and 115b and a plurality of audio input holes 117a and 117b. In the illustrated embodiment, the audio output holes 115a and 115b may be formed on the top and bottom, respectively, of the first housing 101 (and/or the second housing 102). According to an embodiment, the audio output holes 115a and 115b may be formed on a side surface of the first housing 101 and an audio surface of the second housing 102, respectively. The audio input holes 117a and 117b may be formed on the top and bottom, respectively, of the electronic device 100, e.g., the first housing 101. The electronic device 100 may obtain the external audio through the plurality of audio input holes 117a and 117b, thereby performing such function as audio beam forming, active noise canceling (ANC), echo canceling (EC), noise suppression (NS), and/or feedforward (FF) in audio call or audio recording mode. According to an embodiment, an audio input hole not shown may further be formed in the rear surface of the first housing 101 (and/or the second housing 102). The electronic device 100 may obtain the external audio in capture mode, through the audio input hole formed in the rear surface of the first housing 101. As the number of audio input holes 117a and 117b and directions oriented are diversified, the electronic device 100 may provide better performance in audio beamforming, active noise canceling (ANC), echo canceling (EC), noise suppression (NS), and/or feed forward (FF).

According to an embodiment, in the unfolded position, the first housing 101 and the second housing 102 may be disposed to form a designated angle, e.g., 180 degrees, therebetween. When the electronic device 100 unfolds to the designated angle, the foldable display 103 may output a screen through substantially the entire area in the +Z direction. According to an embodiment, the first housing 101 and the second housing 102 may be unfolded obliquely between the position in which they are folded to face each other and the position of the designated angle. In the obliquely unfolded position, the first display area A1 and the second display area A2 of the flexible display 103 may output screens in different directions. For example, when unfolded obliquely, the electronic device 100 may provide screens to two users who sit facing each other. When the screen is output in the obliquely unfolded position, the screen output from the first display area A1 and the screen output from the second display area A2 may be the same as or different from each other.

According to an embodiment, in the folded state, the flexible display 103 may be substantially visually exposed to the outside. For example, the electronic device 100 may output a screen using the first display area A1, the second display area A2, and/or the folding area A3. In some embodiments, in the standby mode, the electronic device 100 may deactivate the screen of the flexible display 103 and activate a partial area according to a designated setting. For example, in the standby mode, the electronic device 100 may at least partially activate the first display area A1 to output daily information, such as time or weather. According to another embodiment, in the standby mode, the electronic device 100 may activate at least one of the first display area A1, the second display area A2, and/or the folding area A3 to provide visual information about the operation state or display notification information, such as messages or news.

According to an embodiment, the radius of curvature of the folding area A3 of the flexible display 103 may be varied when the electronic device 100 is folded or unfolded. For example, as the electronic device 100 is gradually unfolded from the folded state, the radius of curvature of the folding area A3 may gradually increase. In the folding or unfolding operation, the electronic device 100 may adjust a screen output through the folding area A3. For example, the electronic device 100 may compensate for distortion of the output screen according to the transformation of the folding area A3 by adjusting the horizontal-vertical ratio of the screen in the folding area A3 according to a change in the radius of curvature.

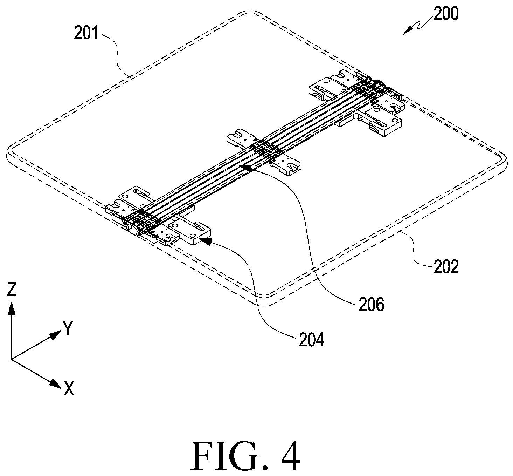

FIG. 3 is a perspective view illustrating an electronic device according to various embodiments of the disclosure; FIG. 4 is a view illustrating a connected structure of a first housing and a second housing in an electronic device according to various embodiments of the disclosure;

Referring to FIGS. 3 and 4, an electronic device 200 may include a first housing 201, a second housing 202 rotatably connected to the first housing 201, a hinge module 204 rotatably coupling the first housing 201 and the second housing 202, and a flexible display 203. The foldable display 203 may be disposed from one surface, e.g., the front surface, of the first housing 201 through the area in which the hinge module 204 is disposed to one surface (e.g., the front surface) of the second housing 202. The configuration of the first housing 201, the second housing 202, the hinge module 204, and the flexible display 203 of FIGS. 3 and 4 may be identical in whole or part to the configuration of the first housing 101, the second housing 102, and the flexible display 103 of FIGS. 1 and 2.

According to an embodiment, the flexible display 203 may include a display panel 231 and a display protective layer 233. The display panel 231 may include a light emitting layer formed between transparent substrates, and the transparent substrate may include an electric circuit, such as a touch sensor. For example, the display panel 231 may be formed of, e.g., organic light emitting diodes (OLEDs) or micro LEDs to output visual information, and may detect the user's direct contact to the display panel 231 or the user's motion within a certain distance. The display protective layer 233 may attach the display panel 231 to the first housing 201 and/or the second housing 202, may include an elastic material, and may be utilized as a cushioning material between the display panel 231 and the structure (e.g., the first housing 201 and/or the second housing 202).

According to various embodiments, the flexible display 203 may include a first display area A1 positioned in the first housing 201, a second display area A2 positioned in the second housing 202, and a folding area A3 connecting the first display area A1 and the second display area A2. The folding area A3 may be disposed substantially corresponding to the area in which the hinge module 204 is disposed and may be transformed into a flat or curved shape as the electronic device 200 (e.g., the electronic device 200 of FIG. 1 and/or FIG. 2) folds or unfolds. When the electronic device 200 is in the unfolded position, the flexible display 203 may output a screen in one direction using substantially the entire area. When the electronic device 200 is in the folded position, the flexible display 203 may output screens in different directions using the first display area A1 and the second display area A2.

According to various embodiments, the first housing 201 may include a first housing member 201a and a first rear plate 201b coupled to the first housing member 201a. The second housing 202 may include a second housing member 202a and a second rear plate 202b coupled to the second housing member 202a. The first housing 201 and the second housing 202 may have substantially the same structure and may partially differ depending on the electric components disposed therein. For example, when the camera module 121 of FIG. 1 is disposed in one of the first housing 201 and the second housing 202, there may be a slight difference in the shape of the first housing 201 and the second housing 202 (e.g., the first rear plate 201b and the second rear plate 202b) or the structure of the first housing member 201a and the second housing member 202a. Such difference between the first housing 201 and the second housing 202 may be varied depending on the products actually manufactured.

According to an embodiment, the first housing member 201a may substantially form the outer appearance of the electronic device 200 (e.g., the first housing 201) and may include a first side bezel structure 211 and a first support plate 213. The first side bezel structure 211 may be a frame shape forming the side surface (e.g., the left side surface of FIG. 1), top and/or bottom of the first housing 201, and be open in the direction adjacent to the second housing 202. According to an embodiment, the first side bezel structure 211 may include a metal and/or polymer. For example, the first side bezel structure 211 may at least partially include a metal and/or an electrically conductive material, thereby serving as an antenna of the electronic device 200. According to an embodiment, the first side bezel structure 211 may include various coat layers, decorating the outer appearance of the electronic device 200 or providing an electrical insulation structure.

According to an embodiment, the first support plate 213 may be disposed in the space between the foldable display 203 and the first rear plate 201b and be connected with the first side bezel structure 211. According to an embodiment, the first support plate 213 may be integrally formed with the first side bezel structure 211 and may include the same material, e.g., metal and/or polymer, as the first side bezel structure 211. According to an embodiment, the first support plate 213 may include a metal and/or electrically conductive material, thereby providing an electromagnetically shielding structure inside the electronic device 200. According to an embodiment, the first support plate 213 may include a metal and/or electrically conductive material, functioning as a ground conductor that provides a reference potential inside the electronic device 200. According to an embodiment, the foldable display 103 (e.g., the first display area A1) may be positioned on the outer surface of the first support plate 213.

According to an embodiment, the first rear plate 201b may be formed by laminated or colored glass, ceramic, polymer, metal (e.g., aluminum, stainless steel (STS), or magnesium), or a combination of at least two thereof). In some embodiments, the first rear plate 201b may be formed substantially integrally with the first housing member 201a, e.g., the first side bezel structure 211. According to an embodiment, the first rear plate 201b may at least partially include a curved area. For example, an edge portion of the first rear plate 201b adjacent to the first side bezel structure 211 may include a portion that is bent towards the front surface (e.g., the surface where the foldable display 203 is disposed) of the electronic device 200 and seamlessly extended. In another embodiment, the first rear plate 201b may be disposed to be inclined with respect to the first display area A1 of the flexible display 103. For example, if the first rear plate 201b is located at a first height from the first display area A1 of the flexible display 103 at the edge adjacent to the second housing 202, it may be located at a second height lower than the first height at the end in the -X-axis direction.

According to an embodiment, the space between the first support plate 213 and the first rear plate 201b may be at least partially surrounded by the first side bezel structure 211. Although not shown, the electronic device 200 may accommodate various electric components, such as a printed circuit board, a battery, a haptic module, a camera module, a sensor module(s) and/or connection terminals, in the space between the first support plate 213 and the first rear plate 201b. For example, the first support plate 213 may be used as a structure that prevents other electric components of the electronic device 200 from contacting the flexible display 203. Some of the electric components accommodated in the electronic device 200, e.g., a camera module (e.g., the camera module 121 of FIG. 1), may be partially exposed to an external space. Here, a component "exposed to the external space" may mean including a component that is isolated from the external space but is visually exposed and/or a component that is exposed to be directly contacted by the user. A processor, memory, and/or interface may be positioned on the printed circuit board.

The processor may include one or more of, e.g., a central processing unit, an application processor, a graphic processing device, a neural network processing device, an image signal processing, a sensor hub processor, or a communication processor. The battery may be a device for supplying power to at least one component of the electronic device 200. The battery 189 may include, e.g., a primary cell which is not rechargeable, a secondary cell which is rechargeable, or a fuel cell. At least a portion of the battery may be disposed substantially coplanar with the printed circuit board, for example between the first support plate 213 and the first rear plate 201b. The battery may be integrally or detachably disposed inside the electronic device 200.

According to an embodiment, an additional support plate and/or an antenna, not shown, may be provided in the space between the first support plate 213 and the first rear plate 201b. The additional support plate may enhance rigidity of the electronic device 200 and may provide an electromagnetic shielding structure between the electric components inside the electronic device 200. The antenna may be disposed between the first support plate 213 (and/or an additional support plate not shown) and the first rear plate 201b. The antenna may include, e.g., a near field communication (NFC) antenna, a wireless charging antenna, and/or a magnetic secure transmission (MST) antenna, performing short-range communication with an external device or wirelessly transmitting/receiving power required for charging. According to an embodiment of the present invention, an antenna structure may be formed by a portion or combination of the first side bezel structure 211 and/or the first support plate 213.

According to an embodiment, the second housing 202 may include a second housing member 202a (e.g., a second side bezel structure 221 and a second support plate 223) and a second rear plate 202b and, since it may have a similar structure to the structure of the first housing 201, a detailed description thereof will be omitted. In some embodiments, as mentioned above, since electrical components disposed in the first housing 201 and/or the second housing 202, e.g., the key input devices 111a and 111b of FIG. 1, the sensor areas S1 and S2, and/or the camera module 121, may be different from each other, the second housing 202 may be partially different in shape or structure from the first housing 201.

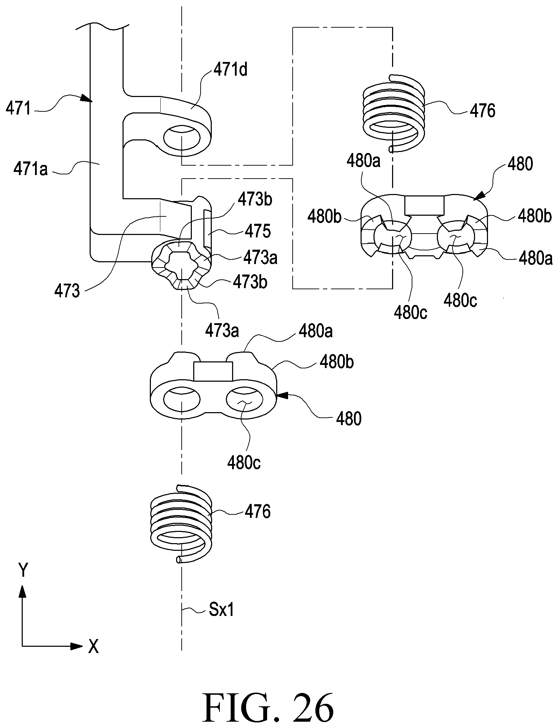

According to various embodiments, the hinge module 204 may rotatably couple the second housing 202 to the first housing 201. According to an embodiment, the first housing 201 may be coupled to the hinge module 204 to rotate about the first rotational axis P1. The second housing 202 may be coupled to the hinge module 204 to rotate about the second rotational axis P2. For example, the first housing 201 and the second housing 202 which are in the unfolded state may be rotated in reverse directions with respect to each other and folded. The first housing 201 and the second housing 202 which are in the folded state may be rotated in reverse directions with respect to each other and unfolded up to a designated angle. Here, the "designated angle" may mean 180 degrees. According to various embodiments, the second rotational axis P2 may be disposed in parallel with the first rotational axis P1 at the predetermined interval. In another embodiment, the second rotational axis P2 may be aligned with the first rotational axis P1. According to an embodiment, the hinge module 204 may allow the rotation of the second housing 202 to interwork with the rotation of the first housing 201. For example, when the first housing 201 rotates in a first direction (e.g., counterclockwise when viewed in the state illustrated in FIG. 3) around the first rotational axis P1, the hinge module 204 may rotate the second housing 202 in a second direction (e.g., clockwise when viewed in the state illustrated in FIG. 3) opposite to the first direction. According to an embodiment, the hinge module 204 may provide a friction force when the first housing 201 and/or the second housing 202 rotates. For example, when the user applies a certain degree of external force, the hinge module 204 may allow the first housing 201 and/or the second housing 202 to pivot, and if no external force is applied, the hinge module 204 may keep the first housing 201 and/or the second housing 202 stationary. In another embodiment, the hinge module 204 may keep the first housing 201 and/or the second housing 202 stationary in the position of the designated angle (e.g., the folded 0-degree position, the unfolded 180-degree position, and/or a position obliquely unfolded at about 120 degrees to about 160 degrees) using a cam structure. The cam structure of the hinge module 204 is described in more detail with reference to the cam member 473 of FIG. 26.

According to various embodiments, a plurality of (e.g., a pair of) hinge modules 204 may be provided and, when the hinge modules 204 are viewed along the length direction (e.g., Y-axis direction), the pair of hinge modules 204 may be aligned with each other. For example, the pair of hinge modules 204 may be symmetrical with respect to the width direction (e.g., the X-axis direction).

According to an embodiment, the electronic device 200 may further include a first slide plate 205a and a second slide plate 205b. The first slide plate 205a may be positioned on the first housing member 201a (e.g., the first support plate 213), and a portion of the hinge module 204 may be coupled to slide between the first support plate 213 and the first slide plate 205a. The second slide plate 205b may be positioned on the second housing member 202a (e.g., the second support plate 223), and a portion of the hinge module 204 may be coupled to slide between the second support plate 223 and the second slide plate 205b. For example, the first slide plate 205a and the second slide plate 205b may couple the first housing 201 and/or the second housing 202 to the hinge module 204 to guide or support the slide of the first housing 201 and/or the second housing 202. According to an embodiment, the first slide plate 205a and/or the second slide plate 205b may not be included in the electronic device 200.

According to various embodiments, the electronic device 200 may include a multi-bar assembly 206. The multi-bar assembly 206 may be disposed corresponding to the area in which the hinge module 204 is disposed and may be disposed between the first support plate 213 and the second support plate 323. For example, the multi-bar assembly 206 may be disposed to support the folding area A3 of the flexible display 203. According to an embodiment, the multi-bar assembly 206 may include multiple (e.g., five) bars or rods extending in one direction. The bars or rods of the multi-bar assembly 206 may have a circular, elliptical, or polygonal cross-section, and may be arranged in parallel with the length direction (Y-axis direction) of the electronic device 200, e.g., the first rotational axis P1 and/or the second rotational axis P2. According to an embodiment, the multiple bars or rods may be arranged along the width direction (X-axis direction) of the electronic device 200 to be rotatably connected with another adjacent bar or rod. As the bars or rods are rotated with respect to another adjacent bar or rod, the multi-bar assembly 206 may be transformed into a flat or curved shape. For example, when the electronic device 200 is folded or unfolded, the multi-bar assembly 206 may support the folding area 230 while transforming to correspond to the folding area 230 of the flexible display 203. When an external object or the user contacts the folding area 230 in the unfolded position of the electronic device 200, the multi-bar assembly 206 may support the folding area 230, suppressing the transformation of the folding area 230.

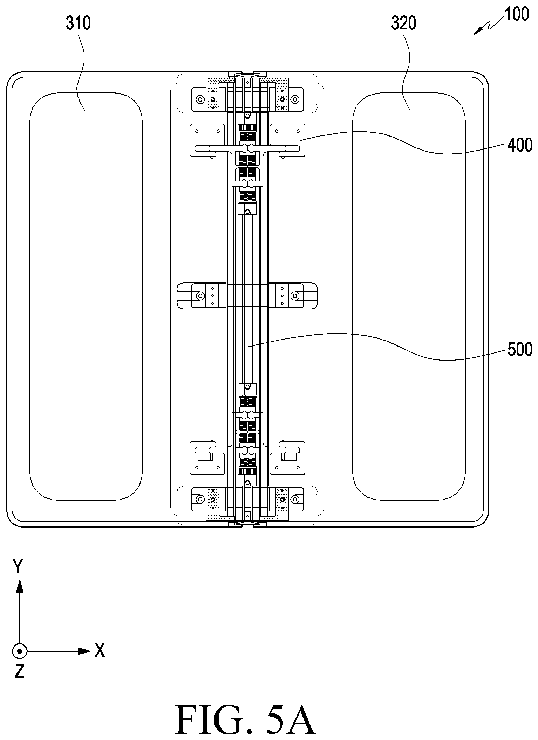

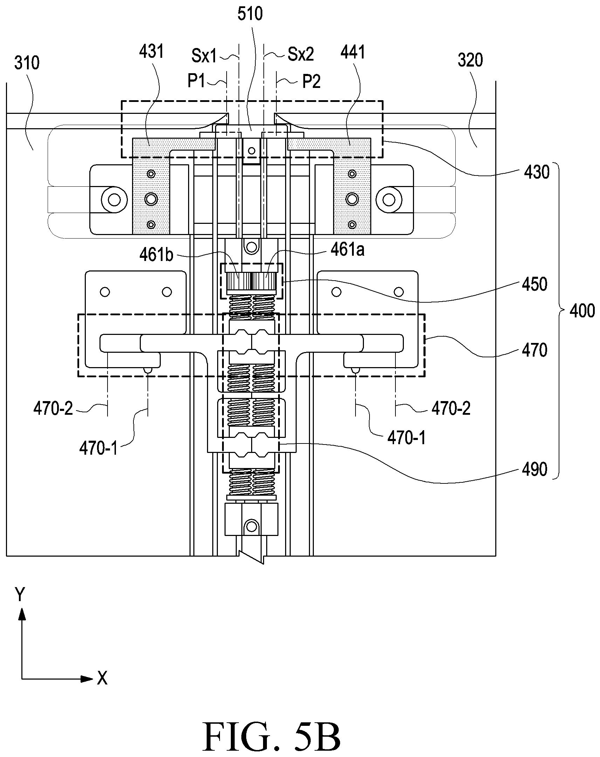

FIGS. 5A and 5B are views illustrating a structure in which a hinge module is disposed in an electronic device according to various embodiments of the disclosure.

Referring to FIGS. 5A and 5B together with FIGS. 1 to 4, a hinge module 400 may include a first rotation portion 430, an interworking portion 450, a second rotation portion 470, or a resistance portion 490. The configurations of the electronic device 100, the first housing 310, and the second housing 320 of FIGS. 5A and 5B may be identical in whole or part to the configuration of the electronic device 200, the first housing 201, and the second housing 202 of FIGS. 3 and 4.

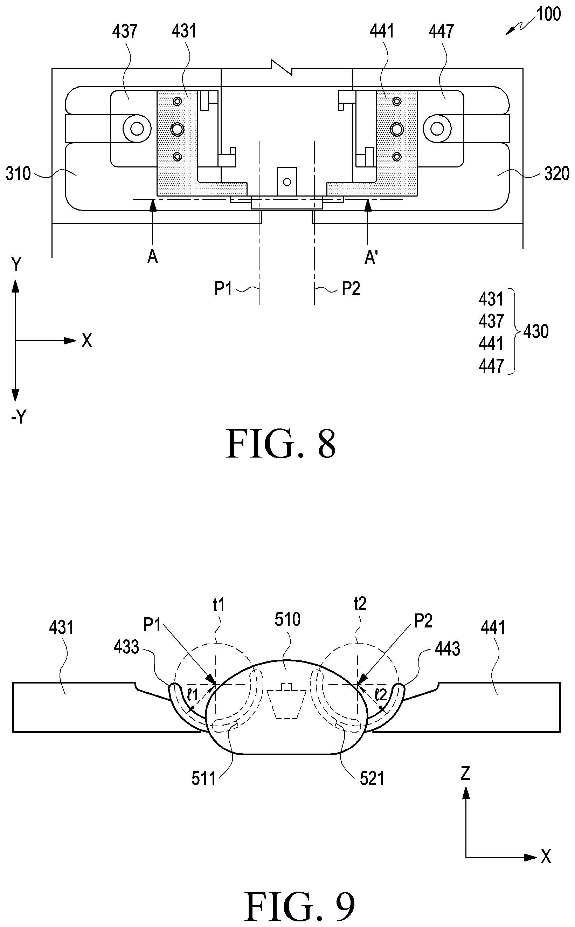

According to various embodiments, the first rotation portion 430 is a portion that substantially implements or guides the rotation of the first housing 310 and/or the second housing 320, and the first rotational axis P1 and/or the second rotational axis P2 may be configured by the structure of the first rotation portion 430. According to an embodiment, the first rotation portion 430 may slide along a groove (e.g., first curved rail guide 511 or second curved rail guide 521 of FIG. 9) formed in the hinge cover 510.

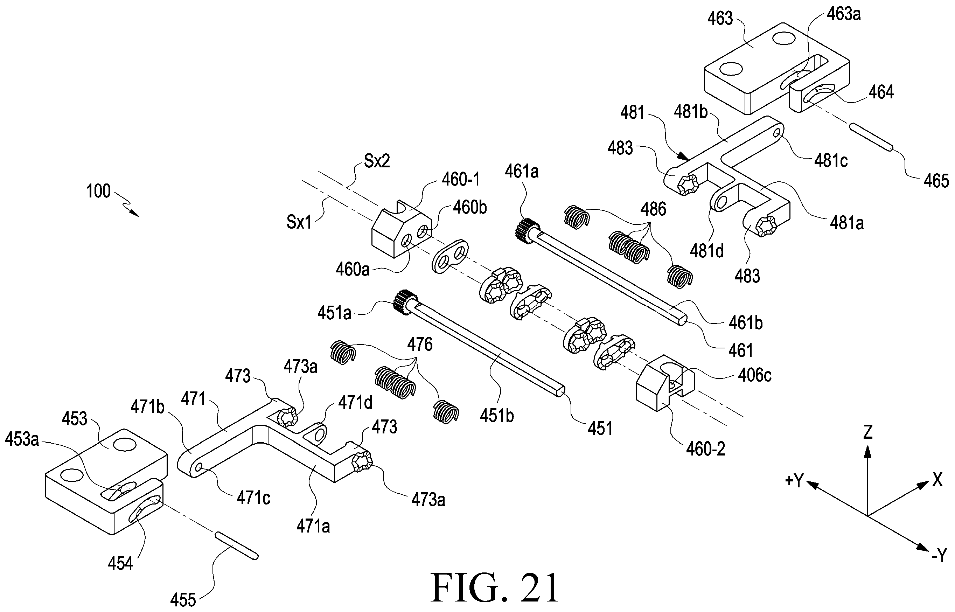

According to various embodiments, the interworking portion 450 may allow the first housing 310 and the second housing 320 to interwork with each other using a structure in which a plurality of (e.g., a pair of or two pairs of) gears (e.g., the first gear 451a or second gear 461a of FIG. 21) are sequentially engaged. For example, among the gears of the interworking portion 450, a first gear 451a may be rotated as the first housing 310 rotates and, among the gears of the interworking portion 450, a second gear 461a may be rotated in a different direction (e.g., reverse direction) from the first gear as the second housing 320 rotates. For example, the first gear and the second gear may be spur gears, and may be engaged with each other to allow the rotation of the first housing 310 and the rotation of the second housing 320 to interwork. In an embodiment, the rotational axis of the first gear (e.g., the first gear shaft rotational axis Sx1 of FIG. 21) and the rotational axis of the second gear (e.g., the second gear shaft rotational axis Sx2 of FIG. 21) may be disposed in parallel to the first rotational axis P1 and/or the second rotational axis P2 in positions spaced apart from the first rotational axis P1 and/or the second rotational axis P2. According to various embodiments, another pair of gears may further be disposed between the first gear and the second gear, and the first gear and the second gear may be rotated in directions opposite to each other while interworking with each other via the other pair of gears. In an embodiment, the interworking portion 450 may be integrated with an inside of the first rotation portion 430 and, in the structure integrated with the first rotation portion 430, the interworking portion 450 may include an internal gear. In another embodiment, the interworking portion 450 may be integrated with the resistance portion 490 to be described below.

According to various embodiments, the resistance portion 490 may include a structure fixed in the hinge module 400 and a structure that is moved (e.g., rotated) as the first housing 310 and/or the second housing 320 rotates, and frictional force may be generated between the fixed structure and the moving structure. For example, when the user applies a certain degree of external force, the hinge module 400 may allow the first housing 310 and/or the second housing 320 to rotate, and if no external force is applied, the hinge module 400 may keep the first housing 310 and/or the second housing 320 stationary. According to another embodiment, the hinge module 400 may keep the first housing 310 and/or the second housing 320 stationary in the position of a designated angle or at the user's desired angle, using the cam structure provided in the resistance portion 490. In another embodiment, if having the structure in which the first housing 310 and/or the second housing 320 is rotatably coupled to the hinge module 400, the resistance portion 490 may be integrated to the rotation structure. When the user applies a certain degree of external force, the resistance portion 490 integrated to the rotation structure may allow the first housing 310 and/or the second housing 320 to rotate, and if no external force is applied and restrict rotation of the first housing 310 and/or the second housing 320 about the hinge module 400 if no external force is applied.

According to an embodiment, the second rotation portion 470, together with the first rotation portion 430, may implement or guide a rotational operation of the first housing 310 and/or the second housing 320. According to an embodiment, the second rotation portion 470 may strengthen the coupling between the hinge module 400 and the first housing 310 and/or the second housing 320. For example, the second rotation portion 470 may be connected to the resistance portion 490, e.g., the moving (e.g., rotating) structure of the resistance portion 490, and rotate along with the first housing 310 and/or the second housing 320.

According to various embodiments, the second rotation portion 470 may be bound to the first housing 310 at at least two points having different distances from the first rotational axis P1 (or first gear shaft rotational axis Sx1) and be bound to the second housing 320 at at least two points having different distances from the second rotational axis P2 (or second gear shaft rotational axis Sx2). For example, as the second rotation portion 470 slides between at least two points (e.g., first point 470-1 and second point 470-2) having different distances from the first rotational axis P1 and the second rotational axis P2, an unintended angular displacement between the first housing 310 and/or the second housing 320 and the second rotation portion 470 may be reduced.

Thus, the second rotation portion 470 may be rotated substantially together with the first housing 310 and/or the second housing 320, providing a stable binding structure between the hinge module 400 and the first housing 310 and/or the second housing 320.

According to an embodiment, the first rotation portion 430 and the second rotation portion 470 may be at least partially positioned between the first support plate 313 and the first slide plate 350a and/or between the second support plate 323 and the second slide plate 350b. For example, a surface contact structure may be provided between the rotation portions (e.g., the first rotation portion 430 and the second rotation portion 470) and the housings (e.g., the first housing 310 and/or the second housing 320), suppressing a relative angular displacement between the second rotation portion 470 and the first housing 310 and/or between the second rotation portion 470 and the second housing 320.

In the following detailed description, the electronic device 100 of FIGS. 1 to 4 and/or the hinge module 400 of FIG. 5 may be referred to as necessary. In the following embodiments, the components identical to those in the above embodiments or easy to understand from the description of the above embodiments are denoted with or without the same reference numerals and their detailed description may be skipped.

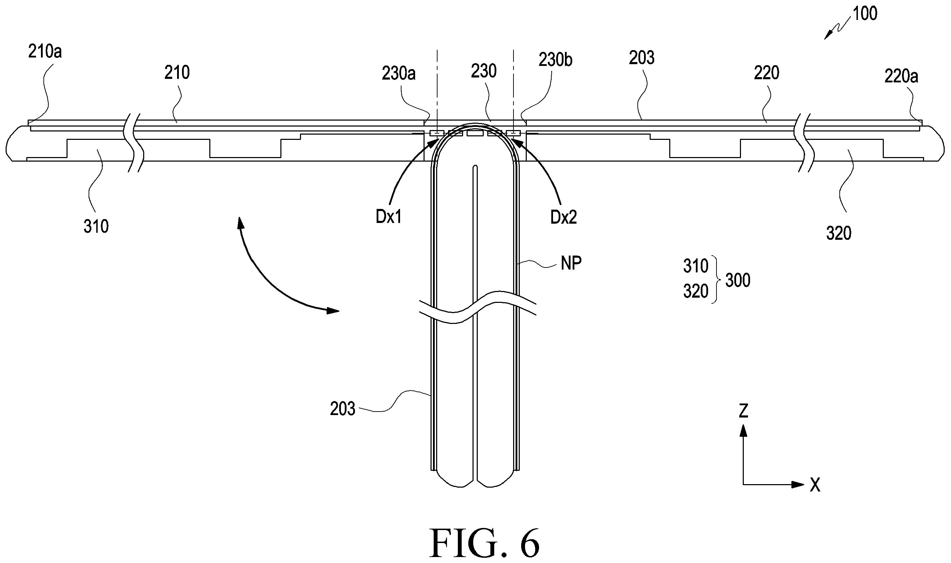

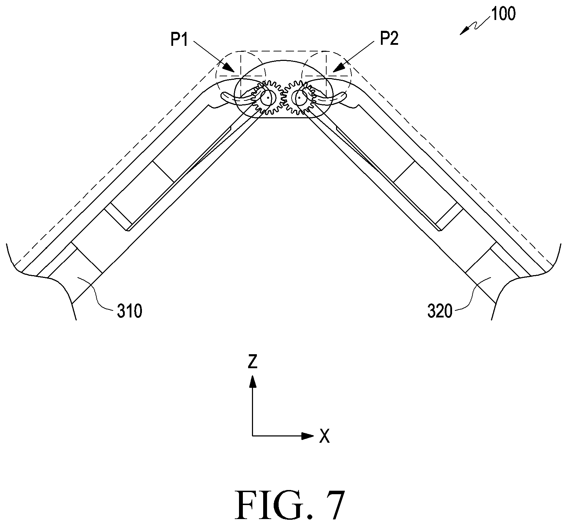

FIG. 6 is a view illustrating a folding of a display according to various embodiments of the disclosure. FIG. 7 is a view illustrating a folding of a housing according to various embodiments of the disclosure.

Referring to FIGS. 6 and 7, when the electronic device 100 is folded, a relative length change in the electronic device 100 may occur based on the thickness of the electronic device 100 in the thickness direction (e.g., Z direction). For example, in the folded electronic device 101, the curvature of the folded area of the foldable housing 300 may be larger than the curvature of the folded area of the flexible display 203, and rotational axis (e.g., the first rotational axis P1 or second rotational axis P2) of the foldable housing 300 may differ from the rotational axis (e.g., the rotational axis Dx1 of the first display area 210 or the rotational axis Dx2 of the second display area 220) of the flexible display 203. The configuration of the flexible display 203, the first housing 310, and the second housing 320 of FIGS. 6 and 7 may be identical in whole or part to the configuration of the flexible display 203, the first housing 201, and the second housing 202 of FIG. 3.

According to various embodiments, a portion of the flexible display 203, which is not subjected to a change in length, in the folded state of the electronic device 100 may be defined as a neutral surface NP of the flexible display 203, and the virtual axis formed by the radius of rotation of the neutral surface NP of the flexible display 203 in the folded state may be defined as a rotational axis Dx1 of the first display area 210 and a rotational axis Dx2 of the second display area 220. According to an embodiment, a portion of the flexible display 203 (e.g., an end 210a of the first display area A1 or first end 230a of the folding area 230 (e.g., the folding area A3 of FIG. 1)) may be rotated about the rotational axis Dx1 of the first display area 210, and another portion (e.g., an end 220a of the second display area 220 or second end 230b of the folding area 230) may be rotated about the rotational axis Dx2 of the second display area 220. According to an embodiment, a portion of the flexible display 203 (e.g., the neutral surface NP of the first display area 210 or the neutral surface NP of the second display area 220) may be rotated about the rotational axis Dx1 of the first display area 210 or the rotational axis Dx2 of the second display area 220. For example, when the electronic device 100 is fully folded, the rotational axis Dx1 of the first display area 210 may be the rotational axis of the neutral surface NP of the first display area 210 (e.g., the first display area A1 of FIG. 1), and the rotational axis Dx2 of the second display area 220 may be the rotational axis of the neutral surface NP of the second display area 220 (e.g., the second display area A2 of FIG. 1).

According to various embodiments, the first housing 310 of the electronic device 100 may be rotated or pivoted about the first rotational axis P1, and the second housing 320 may be rotated or pivoted about the second rotational axis P2. For example, the first housing 310 may be rotated about the first rotational axis P1 formed by the first curved rail guide (e.g., the first curved rail guide 511 of FIG. 9), and the second housing 320 may be rotated about the second rotational axis P2 formed by the second curved rail guide (e.g., the second curved rail guide 521 of FIG. 9).

According to various embodiments, the first rotational axis P1 may be the same as the rotational axis Dx1 of the first display area 210, and the second rotational axis P2 may be the same as the rotational axis Dx2 of the second display area 220. For example, the first end 210a of the first display area 210 or the first end 230a of the folding area 230 may be rotated about the first rotational axis P1, and the second end 220a of the second display **area** 220 or the second end 230b of the folding area 230 may be rotated about the second rotational axis P2. According to an embodiment, in the folded state of the electronic device 100, the neutral surface NP of the first display area 210 positioned in the first housing 310 may be bent about the first rotational axis P1, and the neutral surface NP of the second display area 220 positioned in the second housing 320 may be bent about the second rotational axis P2. When the first rotational axis P1 is the same as the rotational axis Dx1 of the first display area 210, and the second rotational axis P2 is the same as the rotational axis Dx2 of the second display area 220, the foldable housing 300 of the electronic device 100 may be not rotated but slid with respect to the flexible display 203.

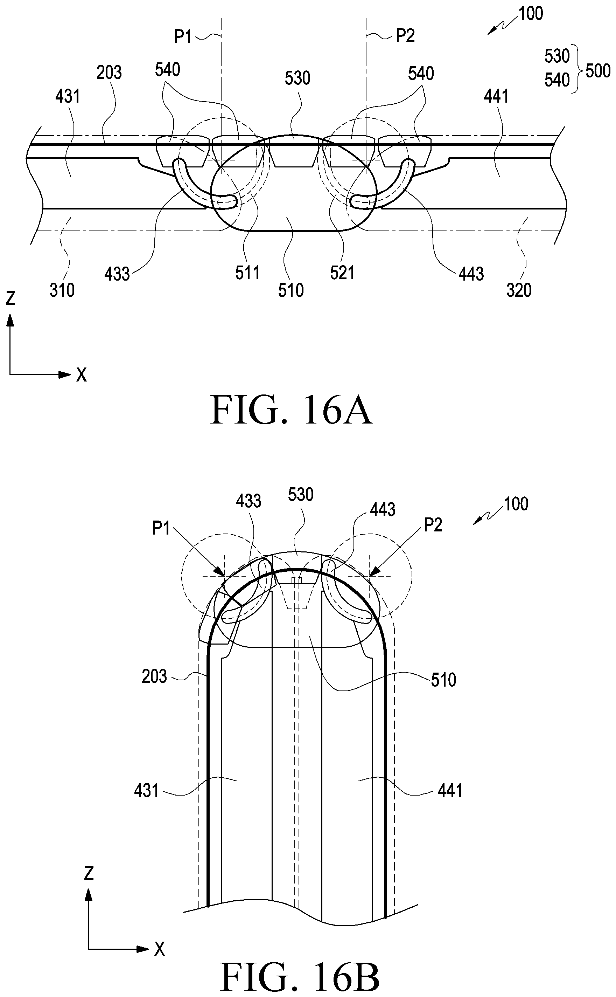

According to various embodiments, the first rotational axis P1 and the second rotational axis P2 may be positioned under (-z-axis direction) the flexible display 203 in the unfolded state (e.g., FIG. 16A) of the electronic device 100 and be positioned outside the flexible display 203 in the folded state (e.g., FIG. 16B) of the electronic device 100.

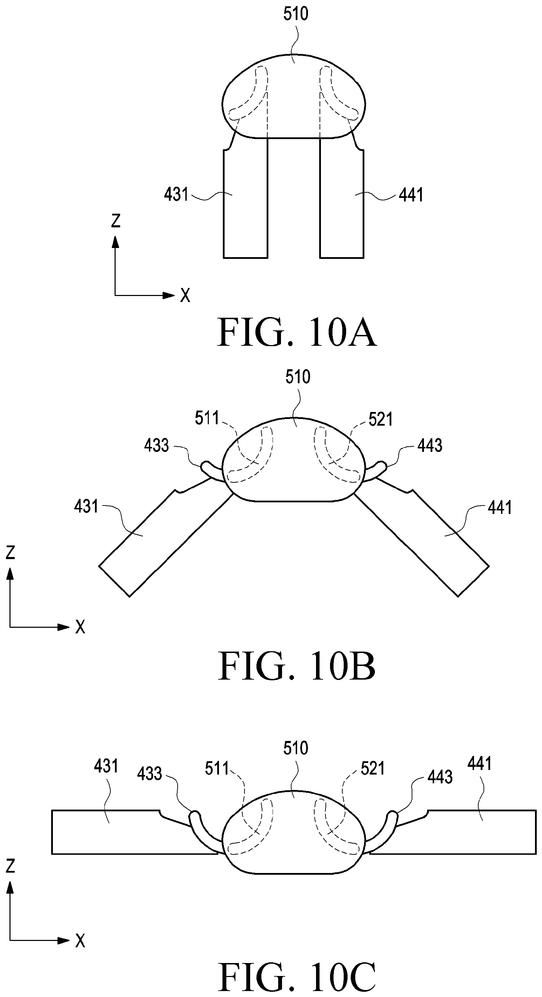

FIG. 8 is an enlarged view of the first rotation portion of FIG. 5B. FIG. 9 is a side view illustrating a hinge cover and a first rotation portion according to various embodiments of the disclosure. FIGS. 10A, 10B, and 10C are views illustrating operations of a first rotation portion according to various embodiments of the disclosure.

Referring to FIGS. 8, 9, and 10A, 10B, and 10C, the first rotation portion 430 may rotate about the hinge cover 510. The configuration of the first rotation portion 430 and the hinge cover 510 of FIGS. 8, 9, and 10A, 10B, and 10C may be identical in whole or part to the configuration of the first rotation portion 430 of FIG. 5 and the hinge cover of FIG. 1.

According to various embodiments, the first rotation portion 430 may rotate about the hinge cover 510 to implement the rotation of the first housing 310 and/or the second housing 320. For example, at least a portion of the first rotation bracket 431 may be inserted into the first curved rail guide 511 and may move along the first curved rail guide 511.

According to various embodiments, the first rotation bracket 431 may include a first rotation rail 433 movable along the first curved rail guide 511. According to an embodiment, the first rotation rail 433 may protrude from the first rotation bracket 431 in the length direction (Y-axis direction) of the electronic device 100 and the width direction (X-axis direction) of the electronic device 100.

According to various embodiments, at least a portion of the first rotation rail 433 may be inserted into the first curved rail guide 511 and may move along the first curved rail guide 511. For example, the first rotation rail 433 may move along the first trajectory t1 spaced apart by a first length l1 about the first rotational axis P1.

According to various embodiments, the first rotation rail 433 may be formed in a curved shape. For example, the first rotation rail 433 may form the edge of the circle having a radius of the first length l1 around the first rotational axis P1.

According to various embodiments, the first rotation portion 430 may include a first supporting bracket 437 capable of connecting the first rotation bracket 431 to the first housing 310. For example, a portion of the first supporting bracket 437 may be coupled to the first housing 310, and another portion of the first supporting bracket 437 may be coupled to the first rotation bracket 431. According to an embodiment, the first rotation bracket 431 and the first supporting bracket 437 may be integrally formed.

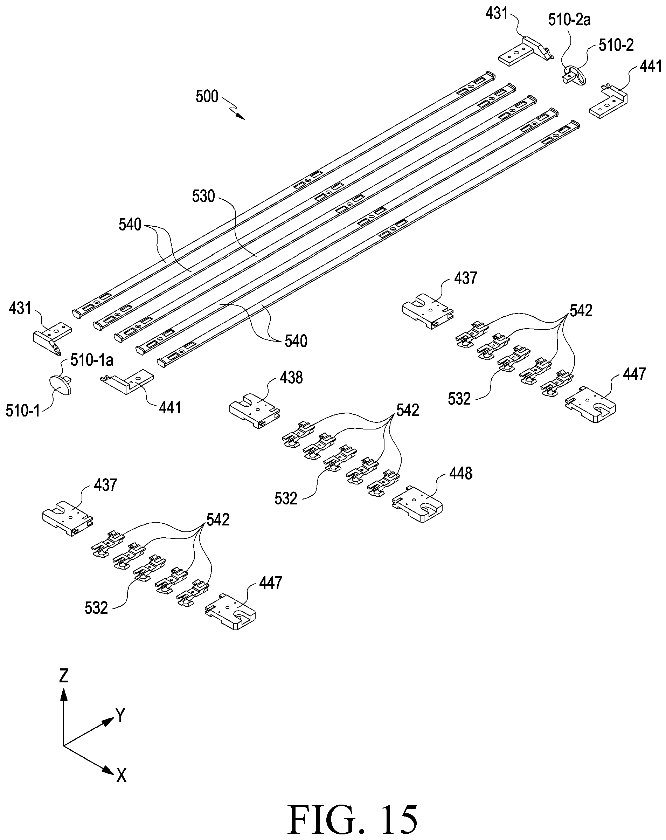

According to various embodiments, the hinge cover 510 may be connected with the hinge module 400. For example, the hinge cover 510 may be positioned on two opposite ends of the hinge module 400. According to an embodiment, the hinge cover 510 may include a first hinge cover (e.g., the first hinge cover 510-1 of FIG. 15) and a second hinge cover (e.g., the second hinge cover 510-2 of FIG. 15) disposed under the electronic device 100.

According to various embodiments, the hinge cover 510 may accommodate at least a portion of the first rotation portion 430. For example, the hinge cover 510 may include the first curved rail guide 511 capable of receiving at least a portion (e.g., the first rotation rail 433) of the first rotation bracket 431.

According to various embodiments, the first curved rail guide 511 may be a groove formed in the hinge cover 510 along a portion of the edge of the circle having a radius of the first length l1 around the first rotational axis P1. According to an embodiment, the first curved rail guide 511 may form a first trajectory t1 spaced apart by the first length l1 about the first rotational axis P1. According to an embodiment, the first curved rail guide 511 may slidably accommodate the first rotation rail 433.

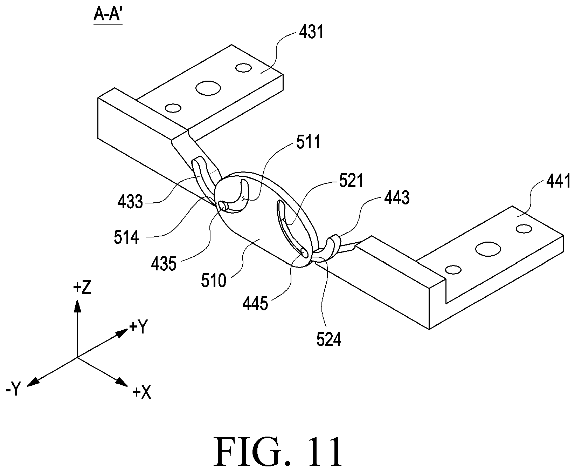

According to various embodiments, the angle at which the electronic device 100 is unfolded may be determined according to the degree to which the first rotation bracket 431 is inserted into the hinge cover 510. According to an embodiment, as the proportion of the first rotation rail 433 of the first rotation bracket 431 disposed within the first curved rail guide 511 increases, the angle at which the electronic device 100 is unfolded may increase. For example, in the folded state, most of the first rotation rail 433 may be inserted into the hinge cover 510 and, in the unfolded state (e.g., FIG. 10C), a portion (e.g., the first stopper 435 of FIG. 11) of the first rotation rail 433 may be inserted into the first curved rail guide 511, and another portion of the first rotation rail 433 may be exposed to the outside of the hinge cover 510.

According to various embodiments, the first rotation portion 430 may include a second rotation bracket 441, a second rotation rail 443, and a second supporting bracket 447. The hinge cover 510 may include a second curved rail guide 521 forming a second trajectory t2 spaced apart by a second length l2 equal to the first length 11 about the second rotational axis P2. The second rotation bracket 441, the second rotation rail 443, the second supporting bracket 447 and the second curved rail guide 521 is symmetrical in configuration with the first rotation bracket 431, the first rotation rail 433, the first supporting bracket 437, and the first curved rail guide 511, respectively, and thus, a detailed description thereof will be omitted.

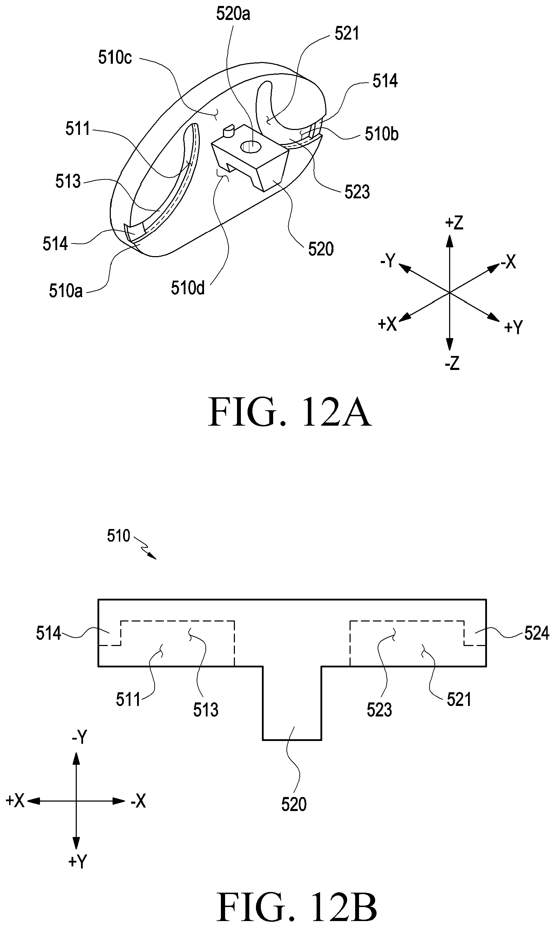

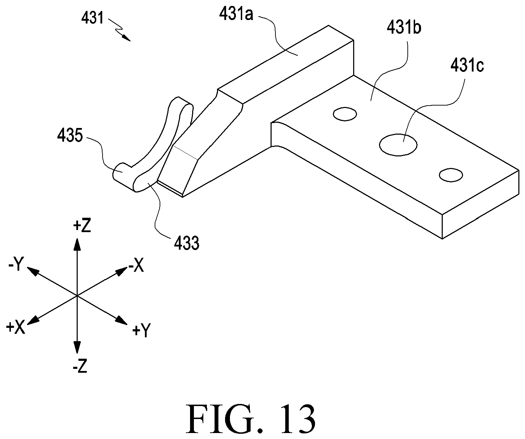

FIG. 11 is a cross-sectional, perspective view taken along plane AA' of FIG. 8. FIG. 12A is a perspective view illustrating a hinge cover according to various embodiments of the disclosure. FIG. 12B is a plan view illustrating a hinge cover according to various embodiments of the disclosure. FIG. 13 is a perspective view illustrating a first rotation bracket according to various embodiments of the disclosure.

Referring to FIGS. 11 to 13, as a portion of the first rotation bracket 431 is inserted and moved in the hinge cover 510, the first rotation bracket 431 may be rotated about the first rotational axis (e.g., the first rotational axis P1 of FIG. 9). The configuration of the hinge cover 510 of FIGS. 11 and 13 may be identical in whole or part to the configuration of the hinge cover 510 of FIGS. 8 and 9, and the configuration of the first rotation bracket 431 of FIGS. 11 and 13 may be identical in whole or part to the configuration of the first rotation bracket 431 of FIGS. 8 and 9.

According to various embodiments, the first rotation bracket 431 may include a first stopper 435 to restrict movement of the first rotation rail 433. According to an embodiment, the first stopper 435 may protrude from an end of the first rotation rail 433 in the direction (-Y-axis direction) towards the outside of the electronic device 100, preventing escape of the first rotation rail 433 off the first curved rail guide 511 or unfolding of the electronic device 100 by more than a predetermined angle (e.g., 180 degrees).

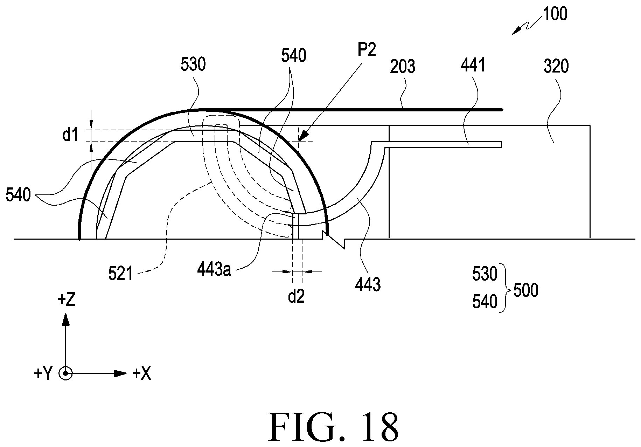

According to various embodiments, the hinge module (e.g., the hinge module 400 of FIG. 5B) may include a second rotation bracket 441 including a second stopper 445 protruding from an end (e.g., the end 443a of FIG. 18) of the second rotation rail 443. The description of the first rotation bracket 431 may be applied to the second rotation bracket 441.

According to various embodiments, the hinge cover 510 may include a first stopper receiving recess 513 for receiving the first stopper 435 and a second stopper receiving recess 523 for receiving the second stopper 445. According to an embodiment, the first stopper receiving recess 513 may be a recess extending along a portion of the first curved rail guide 511. For example, the first stopper receiving recess 513 may be a recess further dug in the length direction (Y-axis direction) from the first curved rail guide 511.

According to various embodiments, the hinge cover 510 may include a third stopper 514 configured to prevent escape of the first stopper 435 off the hinge cover 510 and a fourth stopper 524 configured to prevent escape of the second stopper 445 off the hinge cover 510. According to an embodiment, the third stopper 514 may protrude from the first stopper receiving recess 513 to the inside of the electronic device (e.g., the electronic device 100 of FIG. 1) and, in the unfolded state of the electronic device 100, the distance in which the first stopper 435 is movable may be restricted by the third stopper 514 to prevent escape to the outside of the hinge cover 510. According to an embodiment, the third stopper 514 may form a portion of the edge of the hinge cover 510. According to an embodiment, the third stopper 514 may surround a portion of the first curved rail guide 511. For example, the third stopper 514 may face the first rotation rail 433 of the first rotation bracket 431. According to an embodiment, the third stopper 514 may be formed in the first hinge cover area 510a. The fourth stopper 524 is a component symmetrical with the third stopper 514 with respect to a virtual plane (e.g., ZY plane), and the description of the third stopper 514 may be applied thereto.

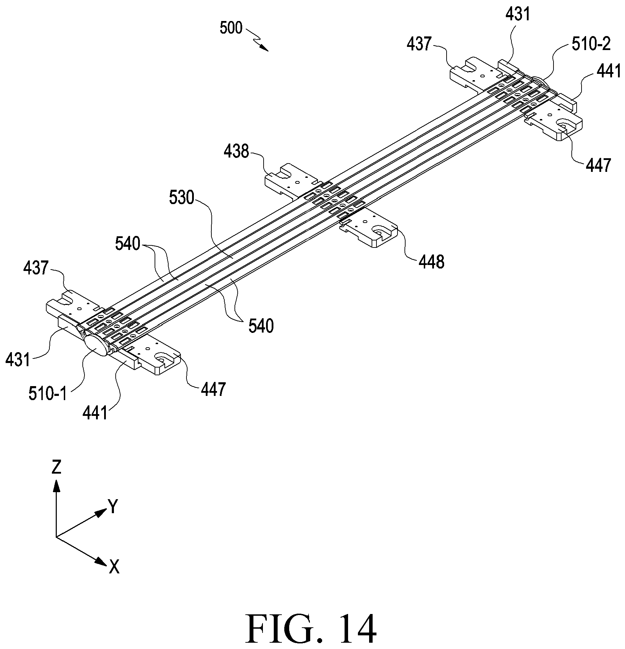

According to various embodiments, the hinge cover 510 may include a protruding area 520 protruding towards the inside of the electronic device (e.g., the electronic device 100 of FIG. 1). According to an embodiment, the protruding area 520 may include a center bar insertion recess 520a for receiving the center bar (e.g., the center bar 530 of FIG. 14). According to an embodiment, the protruding area 520 may be disposed in the center of the hinge cover 510, and the first curved rail guide 511 may be symmetrical with the second curved rail guide 521 with respect to a virtual plane (e.g., YZ plane) crossing the protruding area 520.

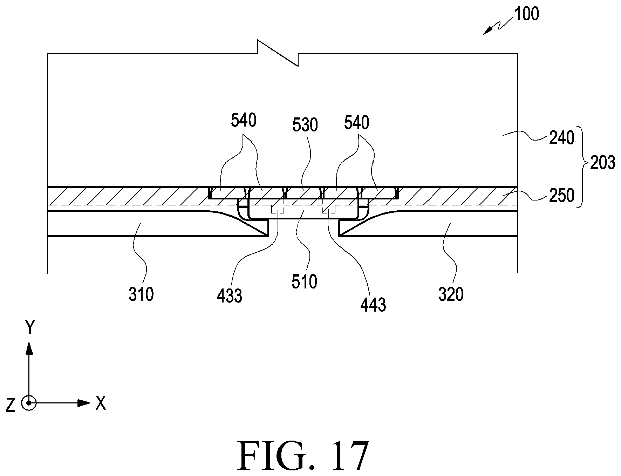

According to various embodiments, the first curved rail guide 511 and the second curved rail guide 521 may extend from the edge of the hinge cover 510 through the inside of the hinge cover 510 to the upper portion of the hinge cover 510. According to an embodiment, the hinge cover 510 may include a first hinge cover area 510a facing at least a portion (e.g., the first side bezel structure 211 or first support plate 213 of FIG. 3) of the first housing 310, a second hinge cover area 510b facing at least a portion (e.g., the second side bezel structure 221 or the second support plate 223 of FIG. 3) of the second housing 320, a third hinge cover area 510c facing at least a portion (e.g., the inactive area 250 of FIG. 17) of the display (e.g., the flexible display 203 of FIG. 2), and a fourth hinge cover area 510d positioned between the first hinge cover area 510a, the second hinge cover area 510b, and the third hinge cover area 510c. According to an embodiment, the fourth hinge cover area 510d may form a center of the hinge cover 510, and the first hinge cover area 510a, the second hinge cover area 510b, and the third hinge cover area 510c may form at least a portion of the edge of the hinge cover 510.

According to various embodiments, the first curved rail guide 511 may extend from the first hinge cover area 510a through the fourth hinge cover area 510d to the third hinge cover area 510c, and the second curved rail guide 521 may extend from the second hinge cover area 510b through the fourth hinge cover area 510d to the third hinge cover area 510c. According to an embodiment, the first curved rail guide 511 may be bent to allow the first rotational axis P1 to be positioned outside the hinge cover 510, and the second curved rail guide 521 may be bent to allow the second rotational axis P2 to be positioned outside the hinge cover 510.

According to various embodiments, the hinge cover 510 may have symmetry with respect to the length direction (Y-axis direction) of the hinge cover 510. For example, the first curved rail guide 511 may be symmetrical with the second curved rail guide 521 along the length direction (Y-axis direction).

According to various embodiments, a plurality of hinge covers 510 may be formed. For example, the electronic device 100 may include a plurality of hinge covers 510 symmetrical with each other along the width direction (e.g., X-axis direction) of the electronic device 100.

According to various embodiments, the first rotation bracket 431 may include a 1-1th rotation bracket area 431a and a 1-2th rotation bracket area 43 1b. According to an embodiment, the 1-1th rotation bracket area 431a may be connected with the first rotation rail 433. For example, the first rotation rail 433 may protrude from the 1-1th rotation bracket area 431a in the length direction Y of the electronic device (e.g., the electronic device 100 of FIG. 1). According to an embodiment, the 1-2th rotation bracket area 431b may be an area extending from the 1-1th rotation bracket area 431a in the length direction Y. The 1-2th rotation bracket area 431b may be coupled with the first supporting bracket 437. For example, the 1-2th rotation bracket area 431b may include at least one fastening hole 431c and be coupled with the first supporting bracket 437 using a fastening member (not shown) passing through the fastening hole 431c. According to an embodiment, the configuration of the second rotation bracket 441 may be identical in whole or part to the configuration of the first rotation bracket 431.

FIG. 14 is a perspective view illustrating a multi-bar assembly according to various embodiments of the disclosure. FIG. 15 is an exploded perspective view illustrating a multi-bar assembly according to various embodiments of the disclosure.

Referring to FIGS. 14 and 15, the multi-bar assembly 500 may be connected with the hinge module 400 and be rotated based on the movement of the hinge module 400. The multi-bar assembly 500 may include a center bar 530 and a multi-bar 540. The configuration of the center bar 530 and the multi-bar 540 of FIGS. 14 and 15 may be identical in whole or part to the configuration of the bar or rod of the multi-bar assembly 500 of FIGS. 3 and 4, and the configuration of the hinge cover 510 of FIGS. 14 and 15 may be identical in whole or part to the configuration of the hinge cover 510 of FIG. 12A.

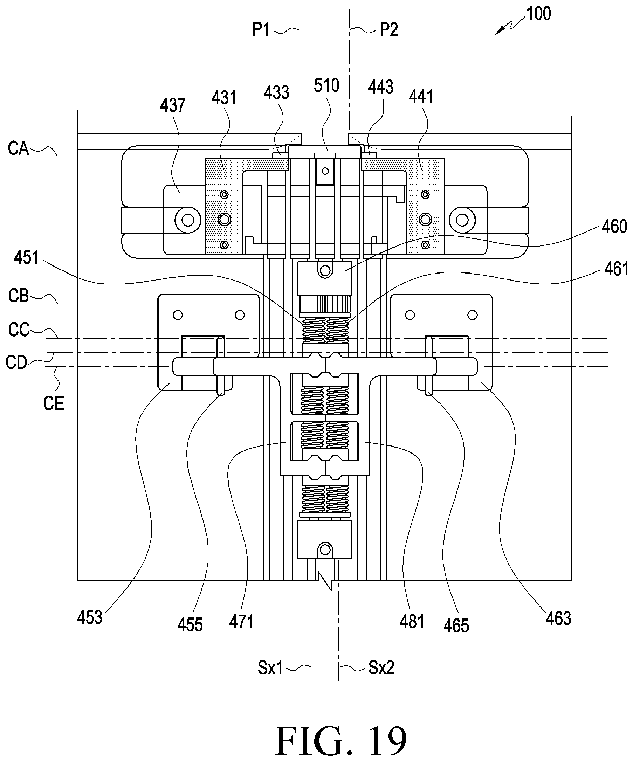

According to various embodiments, the center bar 530 may connect the rotation cover 510 and the hinge module 400. For example, the center bar 530 may be connected with the hinge bracket (e.g., the hinge bracket 460 of FIG. 19) and the hinge cover 510. According to an embodiment, the center bar 530 may be coupled with the center bar insertion recess 520a formed in the protruding area 520 of the hinge cover 510 through the center bar supporting holder 532.

According to various embodiments, the center bar 530 may support the flexible display 203. According to an embodiment, the center bar 530 may be connected with the hinge cover 510. For example, the center bar 530 may be inserted into the center bar insertion recess 520a positioned in the protruding area 520 of the hinge cover 510. According to an embodiment, the center bar 530 may be disposed between the first rotational axis P1 and the second rotational axis P2. According to an embodiment, the center bar 530 may be connected to a plurality of hinge covers 510. For example, the center bar 530 may be connected with the first hinge cover 510-1 and the second hinge cover 510-2. According to an embodiment, the first hinge cover 510-1 may include a first hinge cover surface 510-1a where the first curved rail guide 511 and the second curved rail guide 521 are formed, and the second hinge cover 510-2 may include a second hinge cover surface 510-2a which faces the first hinge cover surface 510-1a and where the first curved rail guide 511 and the second curved rail guide 521 are formed.

According to various embodiments, there may be provided a plurality of multi-bars 540. According to an embodiment the multi-bars 540 may be disposed on two opposite sides of the center bar 530 and face the folding area (e.g., the folding area A3 of FIG. 1). For example, two multi-bars 540 may be disposed on each of the two opposite sides of the center bar 530.

According to various embodiments, the multi-bar assembly 500 may include a plurality of supporting brackets 437 and 447. According to an embodiment, the multi-bar assembly 500 may include a first supporting bracket 437 capable of connecting the first rotation bracket 431 to the first housing (e.g., the first housing 310 of FIG. 5A) and a second supporting bracket 447 capable of connecting the second rotation bracket 441 to the second housing (e.g., the second housing 320 of FIG. 5A). According to an embodiment, the first housing 310 may be connected to the first rotation bracket 431 through the first supporting bracket 437 to be rotated according to the movement of the first rotation bracket 431, and the second housing 320 may be connected to the second rotation bracket 441 through the second supporting bracket 447 to be rotated according to the movement of the second rotation bracket 441. According to an embodiment, the first supporting bracket 437 may be connected with the first rotation bracket 431 and the multi-bar 540, and the second supporting bracket 447 may be connected with the second rotation bracket 441 and the multi-bar 540.

According to various embodiments, the multi-bar assembly 500 may further include supporting brackets 438 and 448 for supporting the multi-bar assembly 500. According to an embodiment, the multi-bar assembly 500 may be connected with the multi-bar 540 and may include a third supporting bracket 438 and a fourth supporting bracket 448 for supporting the multi-bar assembly 500.

According to various embodiments, the multi-bar assembly 500 may include a center bar supporting holder 532 for supporting the center bar 530 and a multi-bar supporting holder 542 for supporting the multi-bar 540. According to an embodiment, the center bar 530 may be coupled with the foldable housing (e.g., the foldable housing 300 of FIG. 1) through the center bar supporting holder 532, and the multi-bar 540 may be coupled with the foldable housing 300 through the multi-bar supporting holder 542.

FIG. 16A is a side view illustrating a hinge cover, a first rotation portion, and a multi-bar assembly in an unfolded state according to various embodiments of the disclosure. FIG. 16B is a side view illustrating a hinge cover, a first rotation portion, and a multi-bar assembly in a folded state according to various embodiments of the disclosure. FIG. 17 is a front view illustrating an electronic device in an unfolded state according to various embodiments of the disclosure. FIG. 18 is a view schematically illustrating a folding of an electronic device according to various embodiments of the disclosure.

Referring to FIGS. 16A, 16B, 17, and 18, the electronic device 100 may be rotated about the first rotational axis P1 or second rotational axis P2 formed by the hinge cover 510 spaced apart in the length direction Y with respect to the multi-bar assembly 500 and the display area 240 of the flexible display 203. The configuration of the flexible display 203, hinge module 400, and multi-bar assembly 500 of FIGS. 16A, 16B, 17, and 18 may be identical in whole or part to the configuration of the flexible display 203, the hinge module 204, and multi-bar assembly 206 of FIG. 3.

According to various embodiments, the hinge module 400 may be rotated along the first rotational axis P1 or second rotational axis P2 without interfering with the flexible display 203 or the center bar 530. For example, in the folded state, the hinge module 400 may be positioned on the same plane as at least a portion of the flexible display 203 and at least a portion of the center bar 530 in the thickness direction (e.g., Z-axis direction) and be spaced apart from at least a portion of the flexible display 203 and at least a portion of the center bar 530 in the length direction (Y-axis direction). For example, the first rotation rail 433 and the second rotation rail 443 may be spaced apart from the center bar 530 or the multi-bar 540 in the length direction. In the folded state (e.g., FIG. 16B) of the electronic device 100, the first rotation rail 433 and the second rotation rail 443 may not contact the center bar 530, the multi-bar 540, or the flexible display 203.

According to an embodiment, when the electronic device 100 is viewed from thereabove (e.g., +Z direction), the hinge cover 510 may not overlap the display area 240 but may overlap a portion of the inactive area 250. For example, the curved rail guide (e.g., the second curved rail guide 521) of the hinge cover 510 may be positioned on the same plane as the flexible display 203 or the center bar 530 of the multi-bar assembly 500 in the thickness direction Z to provide a sufficient distance in which the electronic device 100 may be rotated and, in the unfolded state of the electronic device 100, the rotation rail (e.g., the second rotation rail 443) may be disposed on the curved rail guide (e.g., the second curved rail guide 521). As an example, the rotation rail (e.g., the second rotation rail 443) of the rotation bracket (e.g., the second rotation bracket 441) of the hinge module 400 may be moved along the second curved rail guide 521. In the folded state, the end 443a of the second rotation rail 443 does not come into contact with the flexible display 203 or the center bar 530 of the multi-bar assembly 500, so that the electronic device 100 may rotate.

According to various embodiments, the end 443a of the rotation rail (e.g., the second rotation rail 443) of the rotation bracket (e.g., the second rotation bracket 441) does not contact the center bar 530 or the multi-bar 540, but may be spaced apart in the length direction (e.g., the Y-axis direction) of the electronic device 100. According to an embodiment, when the electronic device 100 is viewed in the length direction (e.g., the Y-axis direction), the second curved rail guide 521 may overlap the center bar 530 and/or the multi-bar 540, and the length of the second curved rail guide 521 where the end 443a of the second rotation rail 443 may be inserted by the length (e.g., the first length d1) in which the center bar 530 and/or the multi-bar 540 and the second curved rail guide 521 overlap each other may increase. The length (e.g., the second length d2) in which the second rotation bracket 441 is inserted into the second curved rail guide 521 in the unfolded state (e.g., FIG. 18) of the electronic device 100 may be increased by the first length d1 in the second rotation rail 443. As the second length d2 in which the second rotation bracket 441 is inserted into the second curved rail guide 521 increases, the stability of the second rotation bracket 441 and the second rotation rail 443 may increase.

According to an embodiment, the display area 240 may be an area where the panel of the flexible display 203 may be disposed, and information may be output to the user, and the inactive area 250 may be a non-display area except for the display area 240. According to an embodiment, the inactive area 250 may be formed to surround the display area 240. The inactive area 250 may cover at least a portion of the first rotation rail 433 and at least a portion of the second rotation rail 443. The thickness of the display area 240 may be larger than the thickness of the inactive area 250.

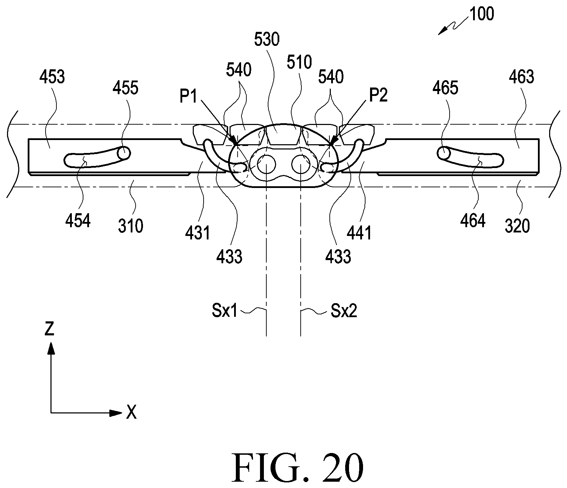

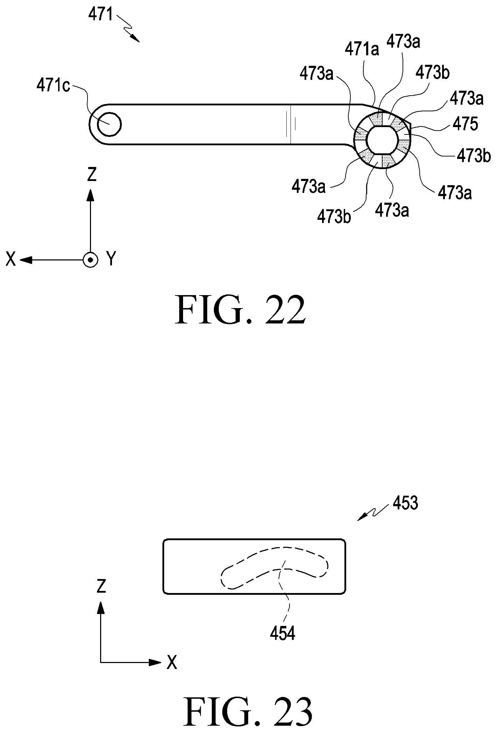

FIG. 19 is a front view illustrating an electronic device except for a display according to various embodiments of the disclosure. FIG. 20 is a side view illustrating an electronic device according to various embodiments of the disclosure. FIG. 21 is an exploded perspective view illustrating a portion of a hinge module according to various embodiments of the disclosure. FIG. 22 is a side view illustrating a first hinge arm according to various embodiments of the disclosure. FIG. 23 is a side view illustrating a first mounting member according to various embodiments of the disclosure.

Referring to FIGS. 19 to 23, the electronic device 100 may allow the rotation of the second housing 320 to interwork with the rotation of the first housing 310 or implement or guide the rotation of the first housing 310 and/or the second housing 320. The configuration of the foldable housing 300, the hinge module 400, and the hinge cover 510 of FIGS. 19 to 21 may be identical in whole or part to the configuration of the first housing 310, the second housing 320, the hinge module 400, and the hinge cover 510 of FIG. 5B.

According to various embodiments, the electronic device 100 may include a hinge bracket 460. The hinge bracket 460 may include a first hinge bracket 460-1 and a second hinge bracket 460-2. The first hinge bracket 460-1 may be mounted on the multi-bar assembly (e.g., the multi-bar assembly 500 of FIG. 3) of the electronic device 100, and the second hinge bracket 460-2 may be mounted on the multi-bar assembly 500 in a position spaced apart from the first hinge bracket 460-1. For example, at least one of the first hinge bracket 460-1 and the second hinge bracket 460-2 may provide a means for mounting the hinge module 400 on the multi-bar assembly 500.

According to an embodiment, the hinge bracket 460 may include a first shaft hole 460a and a second shaft hole 460b. According to an embodiment, the second hinge bracket 460-2 may include a first shaft hole 460a and a second shaft hole 460b formed in the end face of the second hinge bracket 460-2 facing in the -Y direction, and the first hinge shaft bracket 460-1 may include a third shaft hole (not shown) and a fourth shaft hole (not shown) formed in the end face of the first hinge bracket 460-1 facing in the +Y direction and corresponding to the first shaft hole 460a and the second shaft hole 460b, respectively. According to an embodiment, the hinge bracket 460 may include a fastening hole 460c formed in the upper surface, e.g., the surface facing in the +Z direction. The fastening holes 460c may include, e.g., a thread formed on the inner wall, and may provide a means for mounting or fixing the hinge bracket 460 to the multi-bar assembly 206. According to an embodiment, the multi-bar assembly 500 may include a fastening boss corresponding to the fastening hole 460c.

According to various embodiments, the electronic device 100 may include a gear shaft (e.g., the first gear shaft 451 and the second gear shaft 461) rotatably mounted between the first hinge bracket 460-1 and the second hinge bracket 460-2. According to an embodiment, the first gear shaft 451 may be disposed parallel to the Y axis and have one end rotatably coupled to the second hinge bracket 460-2, e.g., the first shaft hole 460a, and the other end rotatably coupled to the first hinge bracket 460-1. The second gear shaft 461 may be disposed in parallel to the Y axis and may have one end rotatably coupled to the second hinge bracket 460-2, e.g., the second shaft hole 460b, and the other end rotatably coupled to the first hinge bracket 460-1.

According to various embodiments, the first gear shaft 451 may include a first gear 451a, and the second gear shaft 461 may include a second gear 461a. According to an embodiment, the first gear 451a and the second gear 461a may be spur gears. If the first gear shaft 451 and the second gear shaft 461 are mounted on the hinge bracket 460, the first gear 451a and the second gear 461a may be engaged with each other. For example, if either the first gear shaft 451a and the second gear shaft 461a rotates in the forward direction (e.g., clockwise direction), the other may be rotated in the reverse direction (e.g., counterclockwise direction). According to an embodiment, the hinge arm (e.g., the first hinge arm 471 and the second hinge arm 481) described below may be fixed or mounted on one of the first gear shaft 451 and the second gear shaft 461 and, as the first housing 310 and the second housing 320 is rotated, be rotated about the rotational axes (e.g., the first gear rotational axis Sx1 and the second gear rotational axis Sx2) of the gear shafts 451 and 461. In an embodiment, if any one of the first housing 310 and the second housing 320 is rotated, the first gear shaft 451 and the second gear shaft 461 may rotate the other housing using the first gear 451a and the second gear 461a. For example, the first gear shaft 451 and the second gear shaft 461 may be rotatably mounted between the first hinge bracket 460-1 and the second hinge bracket 460-2, forming the interworking portion 450 of FIG. 5.

According to various embodiments, the electronic device 100 may include a hinge arm 471 and 481. The hinge arm 471 and 481 may include a first hinge arm 471 mounted or fixed to the first gear shaft 451 and a second hinge arm 481 mounted or fixed to the second gear shaft 461.

According to various embodiments, the first hinge arm 471 may include at least one first mounting portion 471a disposed in parallel to the rotational axis **P1** or P2 or the gear rotational axis Sx1 or Sx2 and a first slide portion 471b extending from the first mounting portion 471a substantially in a vertical direction.

In an embodiment, the first hinge arm 471 may include at least one first cam member 473 protruding from the first mounting portion 471a, and substantially, the first cam member 473 may be mounted or fixed to the gear shaft (e.g., the first gear shaft 451). For example, the first cam member 473 may be mounted to surround the outer circumferential surface of the first gear shaft 451. As the first cam member 473 is rotated together with the first gear shaft 451, the slide portion 471b may be rotated substantially about the rotational axis (e.g., the first gear rotational axis Sx1) of the first gear shaft 451. According to an embodiment, the first cam member 473 may be formed integrally with the first hinge arm 471.

According to various embodiments, the first cam member 473 may include first mountain portions 473a and first valley portions 473b formed on at least one surface. In an embodiment, the first mountain portions 473a and the first valley portions 473b may be formed on two opposite surfaces, e.g., the face facing in the +Y direction and the surface facing in the -Y direction, of the first cam member 473. When viewed from any one surface of the first cam member 473, the first mountain portions 473a may be shaped to further protrude than the first valley portions 473b and be alternately arranged along the rotating direction of the first cam member 473. In another embodiment, the first hinge arm 471 may include a plurality of (e.g., a pair of) first cam members 473. According to an embodiment, the first hinge arm 471 may include a first pin hole 471c. The first pin hole 471c may be formed to pass through a portion (e.g., the first slide portion 471b) of the first hinge arm 471 in the direction parallel to the rotational axis (e.g., the first gear rotational axis Sx1) of the first gear shaft 451.

According to various embodiments, the electronic device 100 may further include a mounting member (e.g., the first mounting member 453 and the second mounting member 463), and the mounting members 453 and 463 may be slidably bound to the hinge arms 471 and 481. According to an embodiment, the first mounting member 453 may be disposed in the first housing 310, and the second mounting member 463 may be disposed in the second housing 320. The first mounting member 453 may be positioned between the first support plate (e.g., the first support plate 213 of FIG. 3) and the first rear plate (e.g., the first rear plate 201b of FIG. 3), and the second mounting member 463 may be positioned between the first support plate (e.g., the second support plate 223 of FIG. 3) and the second rear plate (e.g., the second rear plate 202b of FIG. 3). According to an embodiment, the first mounting member 453 may include at least one first slide recess 454 positioned correspond to the first pin hole 471c. In an embodiment, the first mounting member 453 may include a slot 453a for receiving a portion of the hinge arm 471, e.g., the slide portion 471b, and a pair of first slide recesses 454 may be formed on two opposite sides, respectively, of the slot 453a. The first slide recess 454 may have a trajectory extending generally in the X-axis direction and, according to an embodiment, may have a curved trajectory having a somewhat different height in the Z direction. For example, the first slide recess 454 may extend along the curved trajectory.

According to various embodiments, the hinge module 400 of the electronic device 100 may further include slide pins 455 and 465. The first sliding pin 455 may be mounted in the first pin hole 471c of the first hinge arm 471 to be slidably accommodated in the first slide recess 454. For example, when the first housing 310 and/or the second housing 320 is rotated by external force, the external force applied to the first housing 310 and/or the second housing 320 may rotate the gear shafts 451 and 461. According to an embodiment, the mounting members 453 and 463, sliding pins 455 and 465, and hinge arms 471 and 481 are components for implementing or guiding the rotation of the first housing 310 or second housing 320 based on the movement of the first rotation rail (e.g., the first rotation rail 433 and the second rotation rail 443 of FIG. 9) moving in the hinge cover (e.g., the first hinge cover 510 of FIG. 9) and may form the second rotation portion 470 of FIG. 5.

According to various embodiments, the configurations of the second gear shaft 461, the second mounting member 463, the second slide recess 464, the second sliding pin 465, and the second hinge arm 481 correspond to the first gear shaft 451, the first mounting member 454, the second slide recess 464, the first sliding pin 455, and the first hinge arm 471, and a detailed description thereof is omitted.

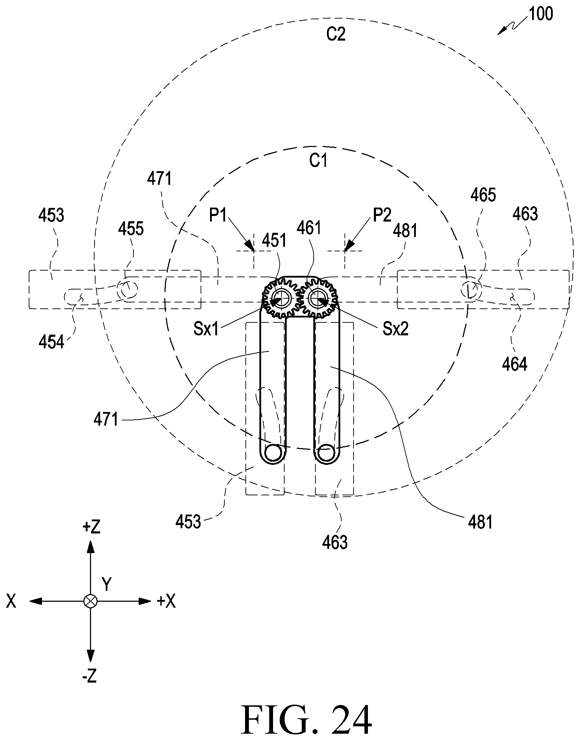

FIG. 24 is a view illustrating operations of a second rotation portion 470 according to various embodiments of the disclosure.

Referring to FIG. 24, the second rotation portion 470 may adjust movement of the components that rotate about different rotational axes along different radii of rotation. According to an embodiment, the rotational axes Sx1 and Sx2 of the gear shafts 451 and 461 may differ from the rotational axes (e.g., the rotational axes P1 and P2 of FIG. 9) of the foldable housing (e.g., the first housing 101 or the second housing 102 of FIG. 1). For example, the second hinge arm 481 may be rotated along a portion of the third trajectory C1 about the second gear rotational axis (e.g., the second gear rotational axis Sx2 of FIG. 21), and the second mounting member 463 may be rotated along a portion of the fourth trajectory C2 about the second rotational axis P2. The radius of the fourth trajectory C2 may be larger than the radius of the third trajectory C1. The configuration of the mounting members 453 and 463, the sliding pins 455 and 465, and the hinge arms 471 and 481 of FIG. 24 may be identical in whole or part to the configuration of the mounting members 453 and 463, the sliding pins 455 and 465, and the hinge arms 471 and 481 of FIGS. 19 to 23.

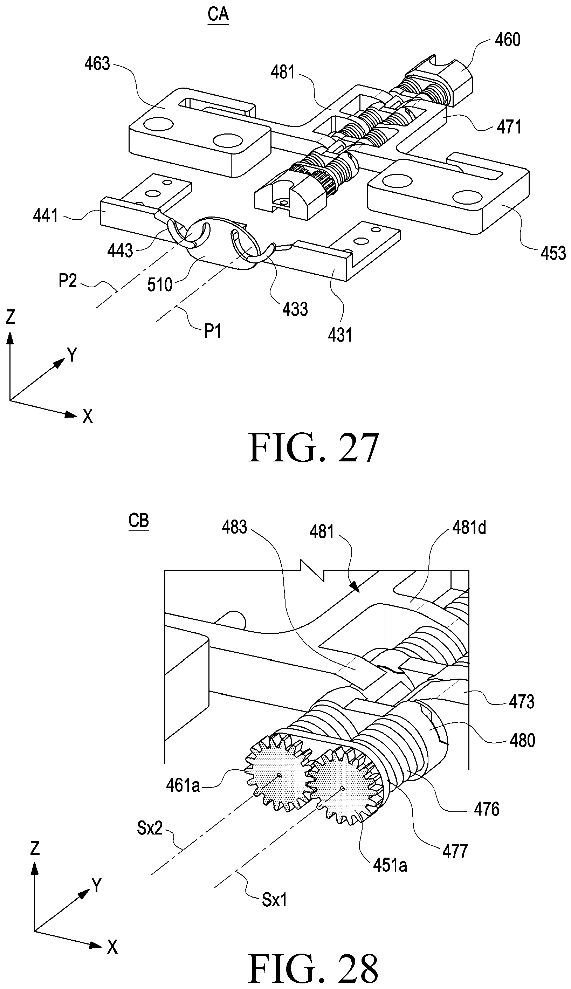

According to various embodiments, when the electronic device 100 is rotated, the mounting members 453 and 463 may be slid, and the hinge arms 471 and 481 may be rotated, transferring the external force applied to the first housing 310 and/or the second housing 320 to the gear shafts 451 and 461. According to an embodiment, the second mounting member 463 may transfer the movement of the second housing 320 to the second gear shaft 461 by using the slide. For example, when an external force is applied to the second housing 320, the second rotation rail 443 may be slid within the second curved rail guide 521. The second housing 320 connected to the second rotation bracket 431 through the second supporting bracket 447 may rotate together with the second curved rail guide 521. When the second housing 320 rotates, the second mounting member 463 connected to the second housing 320 may be slid, and the second hinge arm 481 connected with the second mounting member 463 through the second sliding pin 465 may be rotated. The second gear shaft 461 connected to the second hinge arm 481 may be rotated in the same direction as the rotating direction of the second hinge arm 481, and the first gear shaft 451 engaged with the second gear shaft 461 using the first gear 451a and the second gear 461a may be rotated in the opposite direction to that of the second gear shaft 461. Hereinafter, the first mounting member 453, the first hinge arm 471, the first housing 310, and the first rotation rail 433 may be moved in the opposite to the movement of the second mounting member 463, the second hinge arm 481, the second housing 320, and the second rotation rail 443. The folding and unfolding of the electronic device 100 are described below in detail with reference to FIGS. 27 to 38.

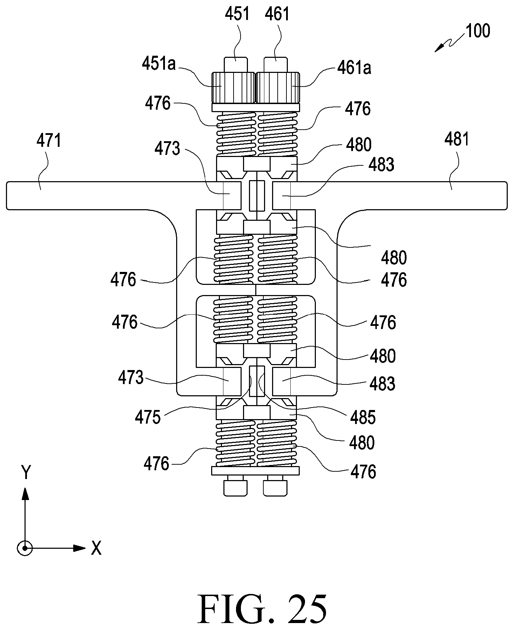

FIG. 25 is a front view illustrating a resistance portion according to various embodiments of the disclosure. FIG. 26 is a view illustrating an arrangement structure of cam members in an electronic device according to various embodiments of the disclosure.

Referring to FIGS. 25 and 26, the hinge module 400 of the electronic device 100 may include at least one third cam member 480 and at least one elastic member 476. The third cam member 480 may be coupled with the gear shafts 451 and 461 and, as the hinge arms 471 and 481 are rotated, come in sliding contact with the first cam member 473 and the second cam member 483. The elastic member 476 may provide an elastic force for bringing the third cam member 480 into tight contact with the first cam member 473 and the second cam member 483, thereby generating frictional force between the first cam member 473 and the second cam member 483. For example, the hinge module 400 of the electronic device 100 may further include the third cam member 480 and/or the elastic member 476, keeping the first housing 310 and the second housing 320 stationary in a position of a predetermined angle. In an embodiment, the frictional force between the first cam member 473 and the third cam member 480 and the frictional force between the second cam member 483 and the third cam member 480 may prevent rotation of the first housing 310 and/or the second housing 320 not intended by the user while no external force is applied. In another embodiment, the hinge module 400 of the electronic device 100 may further include a washer (e.g., the washer 477 of FIG. 28) disposed between the first gear 451a and second gear 461a and the elastic member 476. For example, the washer may prevent direct contact between the gear shafts 451 and 461 and the elastic member 476.

According to various embodiments, the third cam member 480 may include a plurality of, e.g., a pair of rotation holes 480c and may include third mountain portions 480a and third valley portions 480b formed on the edge forming the rotation hole 480c. In an embodiment, the gear shafts 451 and 461 may be rotatably accommodated in one of the rotation holes 480c. In an embodiment, the third cam members 480, respectively, may be disposed on two opposite surfaces of the first cam member 473 and two opposite surfaces of the second cam member 483, and the third cam members 480 may be brought in tight contact with the first cam member 473 and the second cam member 483 by the elastic force of the elastic member 476. The elastic member 476 may be, e.g., a compression coil spring, and may be disposed to substantially surround a portion of the gear shafts 451 and 461. In the illustrated embodiment, one first cam member 473 and second cam member 483 may be disposed between one pair of third cam members 480, and the elastic force of the elastic member 476 may act on two opposite surfaces of the first cam member 473 and two opposite surfaces of the second cam member 483. For example, as the same magnitude of elastic force acts on the first cam member 473 in the -Y direction and +Y direction, an unnecessary load may be prevented from being applied between the first cam member 473 and the first hinge arm 471 (e.g., the first mounting portion 471a). In an embodiment, if a pair of first cam members 473 and a pair of second cam members 483 are provided, two pairs of third cam members 480 may be provided. In the structure in which one pair of third cam members 480 are disposed between the first cam members 473, the hinge module 400 (e.g., the first hinge arm 471) may further include a dummy member 471d formed on the first mounting portion 471a. The dummy member 471d may be disposed between the first cam members 473 and between the second cam members 483, and a plurality of (e.g., a pair of) elastic members 476 may be disposed on two opposite surfaces, respectively, of the dummy member 471d while being supported thereby. For example, in the structure in which a plurality of elastic members 476 between the plurality of first cam members 473, the elastic members 476 may provide an elastic force to the first cam member 473 and/or the second cam member 483 while being isolated by the dummy member 471d.

According to various embodiments, the third mountain portions 480a and the third valley portions 480b may be alternately arranged along the circumference of the third cam member 480 forming the rotation hole 480c. In an embodiment, when the first cam member 473 is rotated with the gear shafts 451 and 461, the first mountain portions 473a may come in sliding contact with the third mountain portions 480a or be engaged with the third valley portions 480b. If the elastic force of the elastic member 476 is provided, in the section where the first mountain portions 473a come in sliding contact with the third mountain portions 480a, the elastic force of the elastic member 476 may be converted into a rotational force to rotate the first cam member 473 in the direction along which the first mountain portions 473a are engaged with the third valley portions 480b. In the positions where the first mountain portions 473a are engaged with the third valley portions 480b, the electronic device 100, e.g., the first housing 310 and the second housing 320, may remain substantially stationary with respect to each other. According to an embodiment, in the position where the first housing 310 and the second housing 320 are folded to face each other, if the first mountain portions 473a are not fully engaged with the third valley portions 480b, the elastic force of the elastic member 476 may act as the force to bring the first housing 310 and the second housing 320 in more contact with each other and/or keep them in the folded state.

According to various embodiments, the hinge module 400 of the electronic device 100 may include a first cam stopper 475 formed on the outer circumferential surface of the first cam member 473 and a second cam stopper 485 formed on the outer circumferential surface of the second cam member 483. The first hinge arm 471 may be mounted or fixed to the first gear shaft 451 through the first cam member 473, and the second hinge arm 481 may be mounted or fixed to the second gear shaft 461 through the second cam member 483. While being mounted or fixed to the gear shafts 451 and 461, the first cam member 473 of the first hinge arm 471 may be disposed adjacent to the second cam member 483 of the second hinge arm 481. In a state in which the electronic device 100 is unfolded at a designated angle (e.g., 180 degrees), the first cam stopper 475 may interfere with or contact the second cam stopper 485, restricting the rotation range of the first cam member 473 and the second cam member 483, e.g., the angular range in which the electronic device 100 may be unfolded. In an embodiment, in the position where the second housing 320 forms an angle of 180 degrees from the first housing 310, the first cam stopper 475 and the second cam member 483 may be brought in contact with each other, so that the range of the angle of the second housing 320 from the first housing 310 may be 0 degrees to 180 degrees.

FIGS. 27 to 38 illustrate sections of different portions of the hinge module 400 in relation to the operation of the same electronic device 100 and/or hinge module 400.

FIG. 27 is a perspective cross-sectional view of the hinge module 300, taken along line 'CA' of FIG. 19.

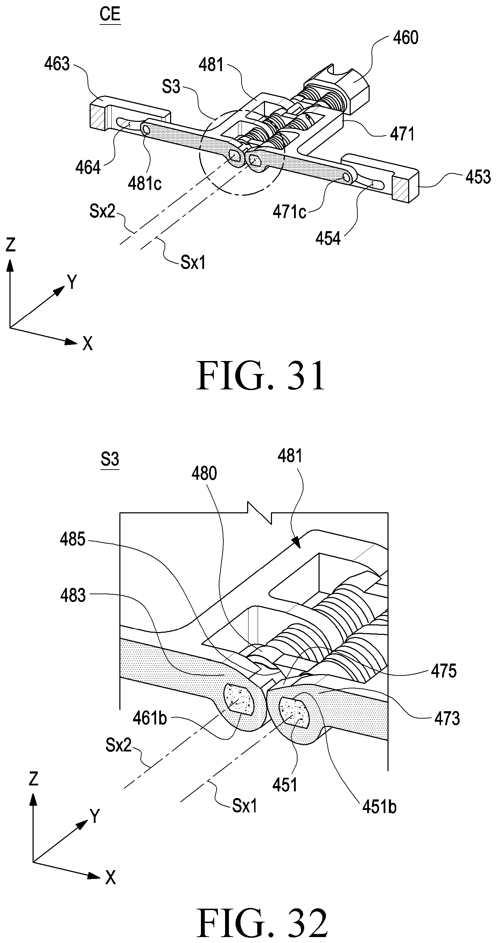

Referring to FIG. 27, in the unfolded state of the electronic device (e.g., the electronic device 100 of FIG. 1), the first rotation portion (e.g., the first rotation portion 430 of FIG. 8), e.g., the rotation rail (e.g., the first rotation rail 433 or second rotation rail 443 of FIG. 8) of the rotation bracket 431 or 441 may be moved in the hinge cover 510. For example, the rotation rails 433 and 443 may be slid about the first rotational axis P1 and the second rotational axis P2, respectively. One end (e.g., the first stopper 435 or second stopper 445 of FIG. 11) of the rotation rail 433 and 435 may be configured to be interfered with by the hinge cover 510. In the state illustrated in FIG. 27, the first stopper 435 of the first rotation rail 433 may be interfered with by the third stopper 514 of the hinge cover 510 to restrict the clockwise rotation of the first rotation bracket 431, and the second stopper 445 of the second rotation rail 443 may be interfered with by the fourth stopper 515 of the hinge cover 510 to restrict the clockwise rotation of the second rotation bracket 441. For example, the hinge cover 510 may allow rotation of the housings (e.g., the first housing 201 and the second housing 202 of FIG. 3) in the direction from the unfolded state to folded state of the electronic device 100 while restricting rotation in the opposite direction. The structure to restrict the rotational range may also be provided through the cam stopper (e.g., the first cam stopper 475 or second cam stopper 485 of FIG. 32), which is described below with reference to FIG. 32.

FIG. 28 is a cross-sectional view of the hinge module (e.g., the hinge module 400 of FIG. 5A), taken along line 'CB' of FIG. 19.

Referring to FIG. 28, in the unfolded state of the electronic device 200, the interworking portion (e.g., the interworking portion 450 of FIG. 5), e.g., the gears 451a and 461a of the gear shafts 451 and 461, may be engaged with each other, so that one may be rotated while the other may be rotated in the reverse direction. In an embodiment, when an external force is applied so that at least one of the first housing 201 and the second housing 202 rotates about the hinge module 200 in one direction, the gear shafts 451 and 461 may be rendered to interwork by the first gear 451a and the second gears 461a so that the other one of the first housing 201 and the second housing 202 may be rotated in the reverse direction. For example, as an external force is applied, the first housing 201 and the second housing 202 may pivot in opposite directions with respect to each other, unfolding or folding.

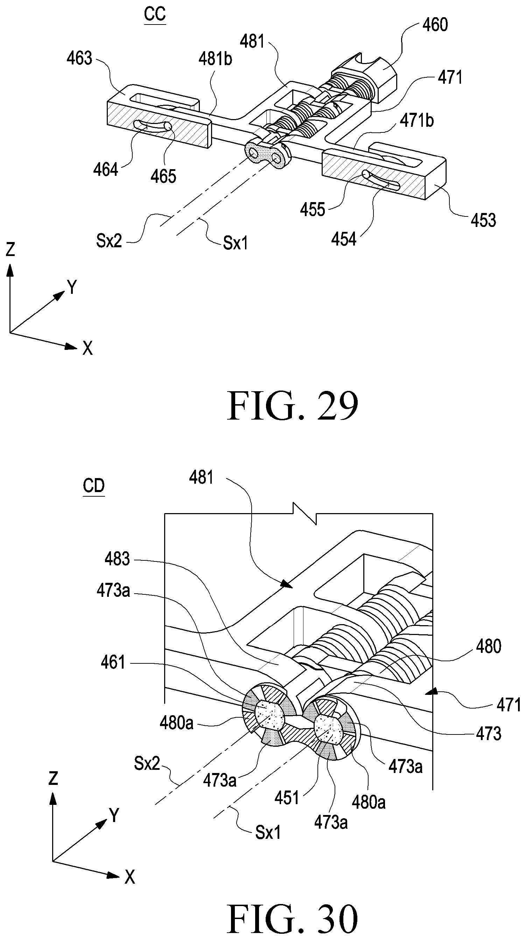

FIG. 29 is a perspective view of the hinge module taken along line 'CC' of FIG. 19.

Referring to FIG. 29, a second rotation portion (e.g., the second rotation portion 470 of FIG. 5) may include hinge arms 471 and 481 and mounting members 453 and 463. At a plurality of points different distances away from the rotational axis Sx1 or Sx2, the hinge arms 471 and 481 and the mounting members 453 and 463 may be slidably bound by the sliding pins 455 and 465. For example, when an external force is applied to the housings 201 and 202 to be rotated, the second rotation portion 470 may restrict the relative angular displacement between the housing 201 or 202 and the hinge arm 471 or 481 (e.g., the mounting member 453 or 464 and the sliding portion 471b or 481b).

FIG. 30 is a view of the hinge module taken along line 'CD' of FIG. 19.

Referring to FIG. 30, in the unfolded state of the electronic device 100, the first mountain portions 473a of the first cam member 473, the second mountain portions 483a of the second cam member 483, and the third mountain portions 480a of the third cam member 480 may be positioned to slidingly contact each other in their inclined sections. For example, in the position illustrated in FIG. 30, the elastic force of the elastic member 476 may be converted into a force to rotate the first hinge arm 471 counterclockwise, and a force to rotate the second hinge arm 481 clockwise. For example, in the unfolded position of the electronic device 100, the first housing 201 and/or the second housing 202 may accommodate rotational force acting in the direction away from the folded position of FIG. 2. As described in connection with FIG. 27, the hinge cover 510 and the structure of the rotation rail 433 and 443 may interfere with each other, and the elastic force of the elastic member 476 acts in the direction along which the first housing 201 and/or the second housing 202 is moved away from the folded position. Thus, the electronic device 100 may stably remain in the unfolded state. In an embodiment, the cam members 473, 483, and 480 may not include the mountain portions 473a, 483a, and 480a and the valley portions 473b, 483b, and 480b. In the structure not including the mountain portions 473a, 483a, and 480a and the valley portions 473b, 483b, and 480b, the elastic force of the elastic member 476 may generate a frictional force between the first cam member 473 and the third cam member 480 and between the second cam member 483 and the third cam member 480. For example, the frictional force generated between the first cam member 473 and the third cam member 480 may keep the first housing 201 and/or the second housing 202 stationary when an external force of a designated magnitude or more is not exerted. As such, the first cam member 473, the second cam member 483, the third cam member 480, and/or the elastic member 363 may restrict rotation of the first housing 201 and/or the second housing 202 regardless of the user's intent, keeping the first housing 201 and/or the second housing 202 in a stable stationary state. For example, the first cam member 473, the second cam member 483, the third cam member 480, and/or the elastic member 476 may substantially function as the resistance portion 490 of FIG. 5.

FIG. 31 is a perspective cross-sectional view of the hinge module 400, taken along line 'CE' of FIG. 19. FIG. 32 is an enlarged view of portion 'S3' of FIG. 31.

Referring to FIGS. 31, and 32, in the unfolded state of the electronic device 200, the first cam stopper 475 of the first cam member 473 and the second cam stopper 485 of the second cam member 483 which are adjacent to each other may interfere with each other. For example, the first housing 201 and/or the second housing 202 may be restricted from rotation in the direction away from the folded position. In an embodiment, the interference structure between the cam stoppers 475 and 485, together with the hinge cover 510 and the rotation rail 433 and 443 structure of FIG. 27, may set an angular range in which the first housing 201 and/or the second housing 202 may be rotated. In an embodiment, the interference structure of the cam stoppers 475 and 485 may be combined with the rotational force converted into by the cam structure (e.g., the first cam member 473 and third cam member 480 of FIG. 15), keeping the electronic device stationary in the position of a designated angle (e.g., the position in which it is unfolded at 180 degrees).

According to various embodiments, the first gear shaft 451 may include a plane 451b formed on the outer circumferential surface, and the second gear shaft 461 may include a plane 461b formed on the outer circumferential surface. For example, the first cam member 473 may be substantially fixed to the first gear shaft 451 and, together with the first gear shaft 451, rotated about the hinge bracket 460. The second cam member 483 may be substantially fixed to the second gear shaft 461 and, together with the second gear shaft 461, rotated about the hinge bracket 460.

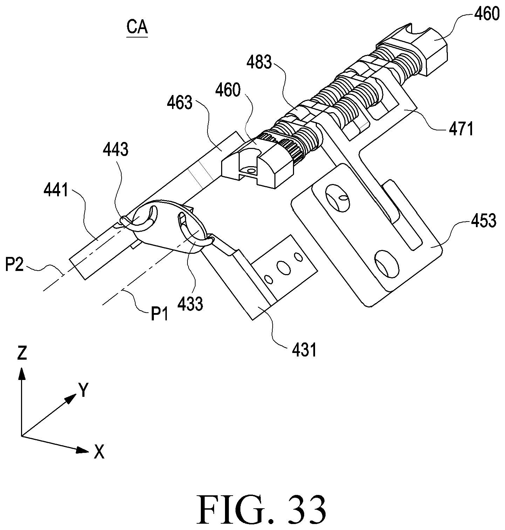

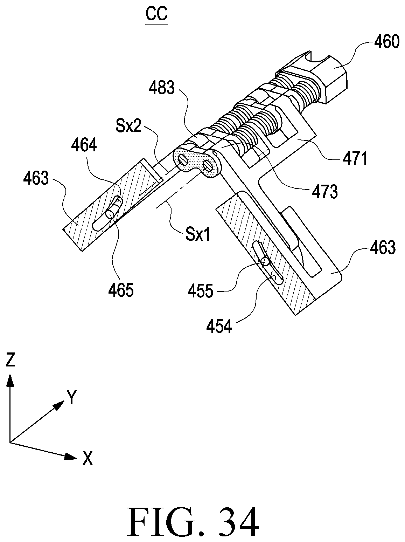

FIG. 33 is a perspective view illustrating a hinge module 400 taken along line 'CA' of FIG. 19 in an operation in which an electronic device (e.g., the electronic device 200 of FIG. 3) and/or a hinge module (e.g., the hinge module 400 of FIG. 5B) folds according to various embodiments of the disclosure. FIG. 34 is a perspective view illustrating a hinge module 400 taken along line 'CC' of FIG. 19, in an operation in which an electronic device 200 and/or a hinge module 400 folds according to various embodiments of the disclosure.

According to various embodiments, as the electronic device 200 transforms from the unfolded state to the folded position, the mounting member 453 or 463 may be slid in the direction closer to the rotational axis P1 or P2 or the gear shaft rotational axis Sx1 or Sx2. For example, while the first housing 201 and/or the second housing 202 is rotated about the rotational axis P1 or P2, the rotation bracket 431 or 441 and the mounting member 453 or 463 connected to the rotation bracket 431 or 441 may be guided by the hinge cover 510 to rotate about the rotational axis P1 or P2, and the hinge arm 471 or 481 connected with the mounting member 453 or 463 may be rotated about the gear shaft rotational axis Sx1 or Sx2. As the position where the mounting member 453 or 463 is connected with the hinge arm 471 or 481 is changed using the sliding pin 455 or 465, the twist of the electronic device 200 due to the displacement of the rotational axis P1 or P2 and the gear shaft rotational axis Sx1 or Sx2 may be prevented.

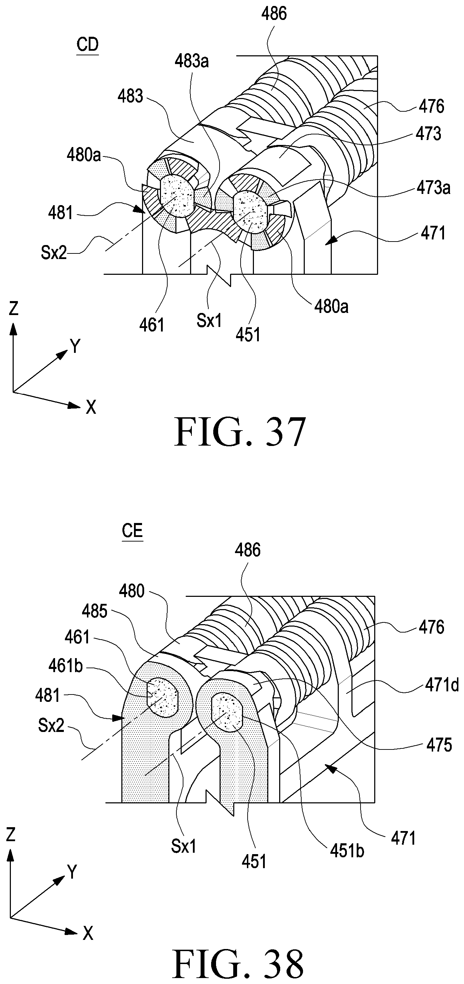

According to various embodiments, while the first housing 201 and/or the second housing 202 is rotated, the first cam member 473 and the second cam member 483 may come in sliding contact with the third cam member 480 while rotating along with the gear shaft 451 or 461. A frictional force may be generated between the first cam member 473 and the third cam member 480 or between the second cam member 483 and the third cam member 480. The frictional force may keep the first housing 201 and/or the second housing 202 stationary in any angular position and, when a designated strength of, or higher, external force is applied, allow the first housing 201 and/or the second housing 202 to rotate. In the structure including the mountain portions 473a, 483a, and 480a, the valley portions 473b, 483b, and 480b, and/or the elastic member 476, the first cam member 473 and the third cam member 480 may convert the elastic force of the elastic member 476 into a rotational force, and the second cam member 483 and the third cam member 480 may convert the elastic force of the elastic member 476 into a rotational force. For example, in a certain angular section, the first cam member 473 and the third cam member 480 may provide a rotational force to act in the direction to allow the electronic device 200 to unfold and, in another angular section, provide a rotational force in the direction to allow the electronic device 200 to fold. According to another embodiment, in the structure including the mountain portions 473a, 483a, and 480a, the valley portions 473b, 483b, and 480b, and/or the elastic member 476, the first cam member 473 and the third cam member 480 may be combined with other mechanical structures (e.g., the first cam stopper 475 of FIG. 38), keeping the electronic device 200 in the position of a designated angle, e.g., an unfolded position or state as shown in FIG. 1. In another embodiment, the mountain portions 473a, 483a, and 480a and the valley portions 473b, 483b, and 480b may maintain the electronic device 200 stationary in an inclined position with respect to each other, in any angular position between the unfolded position and the folded position. For example, when the first housing 201 and the second housing 202 are in an inclined position of about 90 degrees with respect to each other, the first mountain portion 473a and the second mountain portion 483a may be engaged with one of the third valley portions 480b. As such, the section where the first cam member 473 and/or the second cam member 483, together with the third cam member 480, generate a rotational force, and/or the configuration of keeping the first housing 201 and the second housing 202 stationary in an inclined position may be varied depending on the number and positions of the mountain portions 473a, 483a, and 480a and the valley portions 473b, 483b, and 480b included in the cam members 473, 483, and 480.

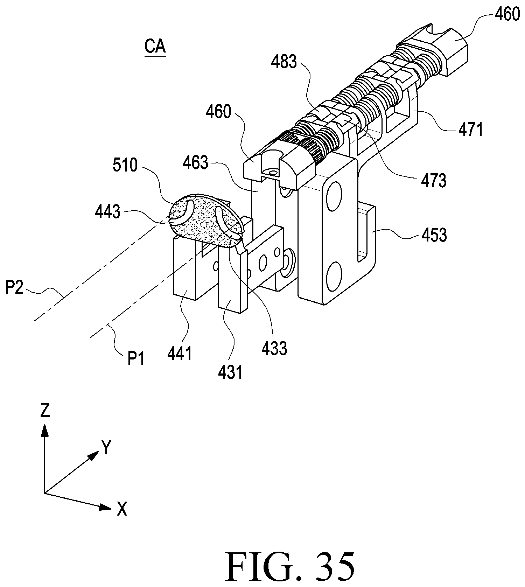

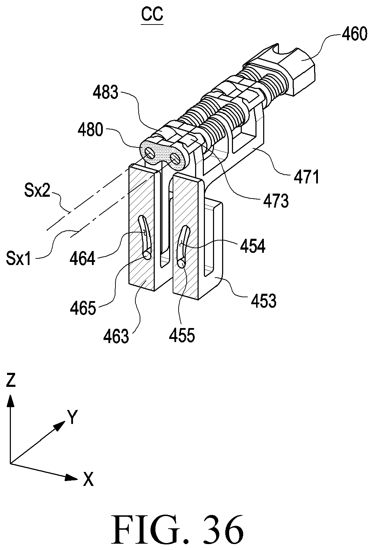

FIG. 35 is a perspective view illustrating a hinge module 400 taken along line 'CA' of FIG. 19 in a state in which an electronic device (e.g., the electronic device 200 of FIG. 3) and/or a hinge module (e.g., the hinge module 400 of FIG. 5B) folds according to various embodiments of the disclosure. FIG. 36 is a perspective view illustrating a hinge module 400 taken along line 'CC' of FIG. 19, in an operation in which an electronic device 200 and/or a hinge module 400 folds according to various embodiments of the disclosure.

Referring to FIGS. 35 and 36, in the folded state of the electronic device 200, the first rotation bracket 431 and the second rotation bracket 441 may be positioned to substantially face each other. 'Positioned to face each other' is an expression to describe relative positions of two components, e.g., the first rotation bracket 431 and the second rotation bracket 441 and, according to an embodiment, other structures may be disposed between the two components facing each other. In the folded state of the electronic device 200, the first hinge arm 471 and the second hinge arm 481 may be positioned to substantially face each other, and the first mounting member 453 and the second mounting member 463 may be positioned to face each other. In the folded state of the electronic device, the mounting members 305a and 305b may be positioned closest to the rotational axis P1 or P2 and/or the gear shaft rotational axis Sx1 or Sx2 within the sliding range of the first housing 201 and/or the second housing 202. In the state illustrated in FIGS. 35 and 36, since the first housing 201 and the second housing 202 substantially interfere with each other, the first rotation bracket 431 may not be rotated clockwise, and the second rotation bracket 441 may not be rotated counterclockwise.

FIG. 37 is a perspective view illustrating a hinge module 300 taken along line 'CD' of FIG. 19 in a state in which an electronic device (e.g., the electronic device 200 of FIG. 3) and/or a hinge module (e.g., the hinge module 400 of FIG. 5B) folds according to various embodiments of the disclosure. FIG. 38 is a perspective view illustrating a hinge module 400 taken along line 'CE' of FIG. 19 in a state in which an electronic device (e.g., the electronic device 200 of FIG. 3) and/or a hinge module (e.g., the hinge module 400 of FIG. 5B) folds according to various embodiments of the disclosure.

Referring to FIG. 37, in the folded state of the electronic device 200, the first cam member 473 and the third cam member 480 may provide a rotational force to rotate the first housing 201 and the second housing 202 in the folding direction. For example, in the folded state of the electronic device 200, the first mountain portion 473a is not fully engaged with the third valley portion (e.g., the third valley portion 480b of FIG. 26), and the elastic force of the elastic member 476 may be converted into or provided as a rotational force to rotate the first housing 201 and the second housing 202 in the folding direction. For example, the resistance portion (e.g., the resistance portion 490 of FIG. 5B) may provide a force to stably keep the electronic device 200 in the folded state.

Referring to FIG. 38, in the folded state of the electronic device 200, the cam stoppers 475 and 485 may be positioned to move away from each other. For example, in the folded state of the electronic device 200, the stopper protrusions 475 and 485 may allow the first hinge arm 471 to rotate counterclockwise and the second hinge arm 481 to rotate clockwise. If the electronic device unfolds, the first hinge arm 471 and/or the second hinge arm 481 may be rotated, causing the first cam stopper 475 of the first cam member 473 and the second cam stopper 485 of the second cam member 483, which are adjacent to each other, to interfere with each other. For example, the electronic device 200 may be rotated between the position where the first housing 201 and the second housing 202 interfere with each other while facing each other and the position where the first cam stopper 475 of the first cam member 473 and the second cam stopper 485 of the second cam member 483 to interfere with each other. In another embodiment, in the position where the first housing 201 and the second housing 202 interfere with each other while facing each other, the mountain portions and the valley portions (e.g., the mountain portions 473a, 483a, and 480a and valley portions 473b, 483b, and 480b of FIG. 15) may provide a rotational force to allow the first housing 201 and the second housing 202 to further tightly contact each other. In another embodiment, in the position where the first cam stopper 475 of the first cam member 473 and the second cam stopper 485 of the second cam member 483 interfere with each other, the mountain portions and the valley portions (e.g., the mountain portions 473a, 483a, and 480a and valley portions 473b, 483b, and 480b of FIG. 26) may provide a rotational force to allow the adjacent first cam stopper 475 and second cam stopper 485 to further tightly contact each other.

### [Legend of symbols (sequence list free text)]

100, 200: electronic device, 103, 203: flexible display, 204, 400: hinge module, 430: rotation portion, 431: first rotation bracket, 441: second rotation bracket, 510: hinge cover, 511: first curved rail guide, 521: second curved rail guide

## Claims

1. An electronic device (100), comprising:
a foldable housing (300) including a first housing (101) and a second housing (102);
a flexible display (103) accommodated in the first housing (101) and the second housing (102);
a hinge module (400) connected with the first housing (101) and the second housing (102); and
a hinge cover (510) connected with the hinge module (400) and including a first curved rail guide (511) spaced apart from a first rotational axis (P1) by a first length (l1) and a second curved rail guide (521) spaced apart from a second rotational axis (P2) symmetrical with the first rotational axis (P1) by the first length (l1), wherein the hinge module (400) includes:
a first rotation bracket (431) connected with the first housing (101) and including a first rotation rail (433) configured to move along the first curved rail guide (511) such that, as the angle at which the electronic device (100) is unfolded increases, a degree to which the first rotation rail (433) is inserted into the hinge cover (510) decreases; and
a second rotation bracket (441) connected with the second housing (102) and including a second rotation rail (443) configured to move along the second curved rail guide (521) such that, as the angle at which the electronic device (100) is unfolded increases, a degree to which the second rotation rail (443) is inserted into the hinge cover (510) decreases, and
wherein a first end (210a) of the display (103) is configured to rotate about the first rotational axis (P1), and a second end (220a) of the display (103) opposite to the first end (210a) is configured to rotate about the second rotational axis (P2).

2. The electronic device (100) of claim 1, wherein the hinge cover (510) further includes:
a first hinge cover area (510a) facing at least a portion of the first housing (101);
a second hinge cover area (510b) facing at least a portion of the second housing (102);
a third hinge cover area (510c) facing at least a portion of the display (103); and
a fourth hinge cover area (510d) positioned between the first hinge cover area (510a), the second hinge cover area (510b), and the third hinge cover area (510c), and wherein the first curved rail guide (511) extends from the first hinge cover area (510a) through the fourth hinge cover area (510d) to the third hinge cover area (510c), and the second curved rail guide (521) extends from the second hinge cover area (510b) through the fourth hinge cover area (510d) to the third hinge cover area (510c).

3. The electronic device (100) of claim 1 or 2, wherein the first rotation bracket (431) further includes a first stopper (435) protruding from an end of the first rotation rail (433), and
the second rotation bracket (441) further includes a second stopper (445) protruding from an end of the second rotation rail (443).

4. The electronic device (100) of claim 3, wherein the hinge cover (510) further includes:
a third stopper (514) configured to surround a portion of the first curved rail guide (511) and prevent escape of the first stopper (435) off the hinge cover (510); and
a fourth stopper (524) configured to surround a portion of the second curved rail guide (521) and prevent escape of the second stopper (445) off the hinge cover (510).

5. The electronic device (100) of claim 3, wherein the hinge cover (510) further includes:
a first stopper (435) receiving recess (513) configured to accommodate the first stopper (435); and
a second stopper receiving recess (523) configured to accommodate the second stopper (445).

6. The electronic device (100) of any one of the preceding claims, wherein the display (103) includes a folding area (A3) foldable along the hinge module (400), and
wherein the electronic device (100) further comprises:
a multi-bar assembly (500) including a center bar (530) connected with the hinge cover (510) and supporting the display (103); and
multi-bars (540) disposed on two opposite sides of the center bar (530) and facing the folding area (A3).

7. The electronic device (100) of claim 6, wherein the hinge module (400) further includes:
a first supporting bracket (437) coupled with the first rotation bracket (431) and the first housing (101); and
a second supporting bracket (447) coupled with the second rotation bracket (441) and the second housing (102).

8. The electronic device (100) of claim 7, wherein the multi-bar assembly (500) further includes a multi-bar supporting holder (542) coupled with the multi-bars (540), and
wherein the first supporting bracket (437) and the second supporting bracket (447) are coupled with the multi-bars (540) through the multi-bar supporting holder (542).

9. The electronic device (100) of claim 6, wherein the multi-bar (500) assembly further includes a center bar supporting holder (532) coupled with the center bar (530),
wherein the hinge cover (510) further includes a protruding area (520) protruding towards an inside of the electronic device (100), and
wherein the center bar (530) is coupled to the protruding area (520) through the center bar supporting holder (532).

10. The electronic device (100) of claim 6, wherein the hinge module (400) further includes a hinge bracket (460) coupled with the center bar (530), a first gear shaft (451) having at least a portion accommodated in the hinge bracket (460), and a second gear shaft (461) having at least a portion accommodated in the hinge bracket (460) and interworking with the first gear shaft (451).

11. The electronic device (100) of claim 10, wherein the hinge module (400) further includes:
a first mounting member (453) coupled with the first housing (101);
a second mounting member (463) coupled with the second housing (102);
a first hinge arm (471) configured to rotate about the first gear shaft (451) and connected with the first mounting member (453) through a first sliding pin (455) configured to slide in the first mounting member (453); and
a second hinge arm (481) configured to rotate about the second gear shaft (461) and connected with the second mounting member (463) through a second sliding pin (465) configured to slide in the second mounting member (463).

12. The electronic device (100) of claim 11, wherein the first mounting member (453) includes a first slide recess (454) slidably receiving the first sliding pin (455), and
wherein the second mounting member (463) includes a second slide recess (464) slidably receiving the second sliding pin (465), and wherein the first slide recess (454) and the second slide recess (464) extend along a curved trajectory.

13. The electronic device (100) of claim 11, wherein the hinge module (400) further includes:
a pair of third cam members (480) including a pair of rotation holes (480c) receiving the first gear shaft (451) and the second gear shaft (461); and
a plurality of elastic members (476) configured to provide pressure to the pair of third cam members (480),
wherein the first hinge arm (471) includes a first cam member (473) receiving the first gear shaft (451), and the second hinge arm (481) includes a second cam member (483) receiving the second gear shaft (461), and wherein the first cam member (473) and the second cam member (483) are disposed between the pair of third cam members (480).

14. The electronic device (100) of any one of the preceding claims, wherein the hinge cover (510) includes:
a first hinge cover (510-1) including a first hinge cover surface (510-1a) having the first curved rail guide (511) and the second curved rail guide (521); and
a second hinge cover (510-2) including a second hinge cover surface (510-2a) facing the first hinge cover surface (510-1a) and having the first curved rail guide (511) and the second curved rail guide (521).

15. The electronic device (100) of any one of the preceding claims, wherein the display (103) includes a display area (240) configured to output a screen and an inactive area (250) surrounding the display area (240), and
wherein at least a portion of the hinge cover (510) is spaced apart from the display area (240) in a length direction of the electronic device (100) and is disposed under the inactive area (250).

## Patentansprüche

1. Elektronische Vorrichtung (100), umfassend:
ein faltbares Gehäuse (300), das ein erstes Gehäuse (101) und ein zweites Gehäuse (102) umfasst;
eine flexible Anzeige (103), die in dem ersten Gehäuse (101) und dem zweiten Gehäuse (102) untergebracht ist;
ein Scharniermodul (400), das mit dem ersten Gehäuse (101) und dem zweiten Gehäuse (102) verbunden ist; und
eine Scharnierabdeckung (510), die mit dem Scharniermodul (400) verbunden ist und eine erste gekrümmte Schienenführung (511), die von einer ersten Drehachse (P1) um eine erste Länge (l1) beabstandet ist, und eine zweite gekrümmte Schienenführung (521), die von einer zweiten Drehachse (P2), die symmetrisch zur ersten Drehachse (P1) ist, um die erste Länge (l1) beabstandet ist, umfasst, wobei das Scharniermodul (400) Folgendes umfasst:
eine erste Drehhalterung (431), die mit dem ersten Gehäuse (101) verbunden ist und eine erste Drehschiene (433) umfasst, die so konfiguriert ist, dass sie sich entlang der ersten gekrümmten Schienenführung (511) bewegt, so dass, wenn der Winkel, unter dem die elektronische Vorrichtung (100) aufgeklappt wird, zunimmt, ein Grad, bis zu dem die erste Drehschiene (433) in die Scharnierabdeckung (510) eingeführt wird, abnimmt; und
eine zweite Drehhalterung (441), die mit dem zweiten Gehäuse (102) verbunden ist und eine zweite Drehschiene (443) umfasst, die so konfiguriert ist, dass sie sich entlang der zweiten gekrümmten Schienenführung (521) bewegt, so dass, wenn der Winkel, unter dem die elektronische Vorrichtung (100) aufgeklappt wird, zunimmt, ein Grad, bis zu dem die zweite Drehschiene (443) in die Scharnierabdeckung (510) eingeführt wird, abnimmt, und
wobei ein erstes Ende (210a) der Anzeige (103) konfiguriert ist, um sich um die erste Drehachse (P1) zu drehen, und ein zweites Ende (220a) der Anzeige (103) gegenüber dem ersten Ende (210a) konfiguriert ist, um sich um die zweite Drehachse (P2) zu drehen.

2. Elektronische Vorrichtung (100) nach Anspruch 1, wobei die Scharnierabdeckung (510) ferner umfasst:
einen ersten Scharnierabdeckungsbereich (510a), der mindestens einem Abschnitt des ersten Gehäuses (101) zugewandt ist;
ein zweiter Scharnierabdeckungsbereich (510b), der mindestens einem Abschnitt des zweiten Gehäuses (102) zugewandt ist;
einen dritten Scharnierabdeckungsbereich (510c), der mindestens einem Abschnitt der Anzeige (103) zugewandt ist; und
einen vierten Scharnierabdeckungsbereich (510d), der zwischen dem ersten Scharnierabdeckungsbereich (510a), dem zweiten Scharnierabdeckungsbereich (510b) und dem dritten Scharnierabdeckungsbereich (510c) positioniert ist, und wobei sich die erste gekrümmte Schienenführung (511) von dem ersten Scharnierabdeckungsbereich (510a) durch den vierten Scharnierabdeckungsbereich (510d) zum dritten Scharnierabdeckungsbereich (510c) erstreckt, und sich die zweite gekrümmte Schienenführung (521) von dem zweiten Scharnierabdeckungsbereich (510b) durch den vierten Scharnierabdeckungsbereich (510d) zum dritten Scharnierabdeckungsbereich (510c) erstreckt.

3. Elektronische Vorrichtung (100) nach Anspruch 1 oder 2, wobei die erste Drehhalterung (431) ferner einen ersten Anschlag (435) umfasst, der von einem Ende der ersten Drehschiene (433) vorsteht, und
die zweite Drehhalterung (441) ferner einen zweiten Anschlag (445) umfasst, der von einem Ende der zweiten Drehschiene (443) vorsteht.

4. Elektronische Vorrichtung (100) nach Anspruch 3, wobei die Scharnierabdeckung (510) ferner umfasst:
einen dritten Anschlag (514), der so konfiguriert ist, dass er einen Abschnitt der ersten gekrümmten Schienenführung (511) umgibt und verhindert, dass der erste Anschlag (435) aus der Scharnierabdeckung (510) austritt; und
einen vierten Anschlag (524), der so konfiguriert ist, dass er einen Abschnitt der zweiten gekrümmten Schienenführung (521) umgibt und verhindert, dass der zweite Anschlag (445) aus der Scharnierabdeckung (510) austritt.

5. Elektronische Vorrichtung (100) nach Anspruch 3, wobei die Scharnierabdeckung (510) ferner umfasst:
eine Ausnehmung (513) zur Aufnahme eines ersten Anschlags (435), die so konfiguriert ist, dass sie den ersten Anschlag (435) aufnehmen kann; und
eine Ausnehmung (523) zur Aufnahme des zweiten Anschlags, die so konfiguriert ist, dass sie den zweiten Anschlag (445) aufnehmen kann.

6. Elektronische Vorrichtung (100) nach einem der vorstehenden Ansprüche, wobei die Anzeige (103) einen Faltbereich (A3) umfasst, der entlang des Scharniermoduls (400) faltbar ist, und
wobei die elektronische Vorrichtung (100) weiterhin umfasst:
eine Mehrstangenanordnung (500), die eine Mittelstange (530) umfasst, die mit der Scharnierabdeckung (510) verbunden ist und die Anzeige (103) unterstützt; und
Mehrfachstangen (540), die auf zwei gegenüberliegenden Seiten der Mittelstange (530) angeordnet sind und dem Faltbereich (A3) zugewandt sind.

7. Elektronische Vorrichtung (100) nach Anspruch 6, wobei das Scharniermodul (400) Folgendes beinhaltet:
eine erste unterstützende Halterung (437), die mit der ersten Drehhalterung (431) und dem ersten Gehäuse (101) gekoppelt ist; und
eine zweite unterstützende Halterung (447), die mit der zweiten Drehhalterung (441) und dem zweiten Gehäuse (102) gekoppelt ist.

8. Elektronische Vorrichtung (100) nach Anspruch 7, wobei die Mehrstangenanordnung (500) ferner einen Mehrstangenhalter (542) beinhaltet, der mit den Mehrstangen (540) gekoppelt ist, und
wobei die erste unterstützende Halterung (437) und die zweite unterstützende Halterung (447) mit den Mehrstangen (540) durch den Mehrstangenhalter (542) gekoppelt sind.

9. Elektronische Vorrichtung (100) nach Anspruch 6, wobei die Mehrstangenanordnung (500) ferner einen die Mittelstange unterstützenden Halter (532) umfasst, der mit der Mittelstange (530) gekoppelt ist,
wobei die Scharnierabdeckung (510) ferner einen vorstehenden Bereich (520) beinhaltet, der in Richtung einer Innenseite der elektronischen Vorrichtung (100) vorsteht, und
wobei die Mittelstange (530) über den die Mittelstange unterstützenden Halter (532) mit dem vorstehenden Bereich (520) gekoppelt ist.

10. Elektronische Vorrichtung (100) nach Anspruch 6, wobei das Scharniermodul (400) ferner eine mit der Mittelstange (530) gekoppelte Scharnierhalterung (460), eine erste Getriebewelle (451), von der mindestens ein Abschnitt in der Scharnierhalterung (460) untergebracht ist, und eine zweite Getriebewelle (461) beinhaltet, von der mindestens ein Abschnitt in der Scharnierhalterung (460) untergebracht ist und die mit der ersten Getriebewelle (451) zusammenarbeitet.

11. Elektronische Vorrichtung (100) nach Anspruch 10, wobei das Scharniermodul (400) Folgendes beinhaltet:
ein erstes Montageelement (453), das mit dem ersten Gehäuse (101) verbunden ist;
ein zweites Montageelement (463), das mit einem zweiten Gehäuse (102) verbunden ist;
einen ersten Gelenkarm (471), der so konfiguriert ist, dass er sich um die erste Getriebewelle (451) dreht und mit dem ersten Montageelement (453) über einen ersten Gleitstift (455) verbunden ist, der so konfiguriert ist, dass er in dem ersten Montageelement (453) gleitet; und
einen zweiten Gelenkarm (481), der so konfiguriert ist, dass er sich um die zweite Getriebewelle (461) dreht, und der mit dem zweiten Montageelement (463) über einen zweiten Gleitstift (465) verbunden ist, der so konfiguriert ist, dass er im zweiten Montageelement (463) gleitet.

12. Elektronische Vorrichtung (100) nach Anspruch 11, wobei das erste Montageelement (453) eine erste gleitende Ausnehmung (454) umfasst, die den ersten Gleitstift (455) gleitend aufnimmt, und
wobei das zweite Montageelement (463) eine zweite gleitende Ausnehmung (464) umfasst, die den zweiten Gleitstift (465) gleitend aufnimmt, und wobei die erste gleitende Ausnehmung (454) und die zweite gleitende Ausnehmung (464) sich entlang einer gekrümmten Bahn erstrecken.

13. Elektronische Vorrichtung (100) nach Anspruch 11, wobei das Scharniermodul (400) Folgendes beinhaltet:
ein Paar dritter Nockenelemente (480), die ein Paar Drehlöcher (480c) umfassen, die die erste Getriebewelle (451) und die zweite Getriebewelle (461) aufnehmen; und
eine Vielzahl von elastischen Elementen (476), die so konfiguriert sind, dass sie Druck auf das Paar dritter Nockenelemente (480) ausüben,
wobei der erste Gelenkarm (471) ein erstes Nockenelement (473) umfasst, das die erste Getriebewelle (451) aufnimmt, und der zweite Gelenkarm (481) ein zweites Nockenelement (483) umfasst, das die zweite Getriebewelle (461) aufnimmt, und wobei das erste Nockenelement (473) und das zweite Nockenelement (483) zwischen dem Paar dritter Nockenelemente (480) angeordnet sind.

14. Elektronische Vorrichtung (100) nach einem der vorhergehenden Ansprüche, wobei die Scharnierabdeckung (510) Folgendes umfasst:
eine erste Scharnierabdeckung (510-1), die eine erste Scharnierabdeckungsfläche (510-1a) mit der ersten gekrümmten Schienenführung (511) und der zweiten gekrümmten Schienenführung (521) umfasst; und
eine zweite Scharnierabdeckung (510-2), die eine zweite Scharnierabdeckungsfläche (510-2a) umfasst, die der ersten Scharnierabdeckungsfläche (510-1a) zugewandt ist und die erste gekrümmte Schienenführung (511) und die zweite gekrümmte Schienenführung (521) aufweist.

15. Elektronische Vorrichtung (100) nach einem der vorhergehenden Ansprüche, wobei die Anzeige (103) einen Anzeigebereich (240), der zur Ausgabe eines Bildschirms konfiguriert ist, und einen den Anzeigebereich (240) umgebenden inaktiven Bereich (250) beinhaltet, und
wobei zumindest ein Abschnitt der Scharnierabdeckung (510) in einer Längsrichtung der elektronischen Vorrichtung (100) von dem Anzeigebereich (240) beabstandet ist und unter dem inaktiven Bereich (250) angeordnet ist.

## Revendications

1. Dispositif électronique (100), comprenant :
un boîtier pliable (300) comprenant un premier boîtier (101) et un deuxième boîtier (102) ;
un affichage flexible (103) logé dans le premier boîtier (101) et le deuxième boîtier (102) ;
un module de charnière (400) relié au premier boîtier (101) et au deuxième boîtier (102) ; et
un couvercle de charnière (510) relié au module de charnière (400) et comprenant un premier guide de rail incurvé (511) espacé d'un premier axe de rotation (P1) par une première longueur (l1) et un second guide de rail incurvé (521) espacé d'un second axe de rotation (P2) symétrique au premier axe de rotation (P1) par la première longueur (l1), le module de charnière (400) comprenant :
un premier support de rotation (431) relié au premier boîtier (101) et comprenant un premier rail de rotation (433) configuré pour se déplacer le long du premier guide de rail incurvé (511) de sorte que, lorsque l'angle auquel le dispositif électronique (100) est déplié augmente, un degré d'insertion du premier rail de rotation (433) dans le couvercle de charnière (510) diminue ; et
un second support de rotation (441) relié au second boîtier (102) et comprenant un second rail de rotation (443) configuré pour se déplacer le long du second guide de rail incurvé (521) de sorte que, lorsque l'angle auquel le dispositif électronique (100) est déplié augmente, un degré d'insertion du second rail de rotation (443) dans le couvercle de charnière (510) diminue, et
dans lequel une première extrémité (210a) de l'affichage (103) est configurée pour tourner autour du premier axe de rotation (P1), et une seconde extrémité (220a) de l'affichage (103) opposée à la première extrémité (210a) est configurée pour tourner autour du second axe de rotation (P2).

2. Dispositif électronique (100) de la revendication 1, dans lequel le couvercle de charnière (510) comprend en outre :
une première zone de recouvrement de charnière (510a) faisant face à au moins une partie du premier boîtier (101) ;
une deuxième zone de recouvrement de charnière (510b) faisant face à au moins une partie du deuxième boîtier (102) ;
une troisième zone de recouvrement de charnière (510c) faisant face à au moins une partie de l'affichage (103) ; et
une quatrième zone de recouvrement de charnière (510d) positionnée entre la première zone de recouvrement de charnière (510a), la deuxième zone de recouvrement de charnière (510b) et la troisième zone de recouvrement de charnière (510c), et le premier guide de rail incurvé (511) s'étendant de la première zone de recouvrement de charnière (510a) à la troisième zone de recouvrement de charnière (510c) en passant par la quatrième zone de recouvrement de charnière (510d), et le deuxième guide de rail incurvé (521) s'étendant de la deuxième zone de recouvrement de charnière (510b) à la troisième zone de recouvrement de charnière (510c) en passant par la quatrième zone de recouvrement de charnière (510d).

3. Dispositif électronique (100) de la revendication 1 ou 2, dans lequel le premier support de rotation (431) comprend en outre une première butée (435) faisant saillie à partir d'une extrémité du premier rail de rotation (433), et
le second support de rotation (441) comprend en outre une seconde butée (445) faisant saillie à partir d'une extrémité du second rail de rotation (443).

4. Dispositif électronique (100) de la revendication 3, dans lequel le couvercle de charnière (510) comprend en outre :
une troisième butée (514) configurée pour entourer une partie du premier guide de rail incurvé (511) et empêcher l'échappement de la première butée (435) du couvercle de charnière (510) ; et
une quatrième butée (524) configurée pour entourer une partie du second guide de rail incurvé (521) et empêcher l'échappement de la seconde butée (445) du couvercle de charnière (510).

5. Dispositif électronique (100) de la revendication 3, dans lequel le couvercle de charnière (510) comprend en outre :
un premier évidement (513) de réception de butée (435) configuré pour accueillir la première butée (435) ; et
un second évidement (523) de réception de butée configuré pour accueillir la seconde butée (445).

6. Dispositif électronique (100) de l'une quelconque des revendications précédentes, dans lequel l'affichage (103) comprend une zone de pliage (A3) pouvant être pliée le long du module de charnière (400), et
dans lequel le dispositif électronique (100) comprend en outre :
un ensemble à barres multiples (500) comprenant une barre centrale (530) reliée au couvercle de charnière (510) et prenant en charge l'affichage (103) ; et
des barres multiples (540) disposées sur deux côtés opposés de la barre centrale (530) et faisant face à la zone de pliage (A3).

7. Dispositif électronique (100) de la revendication 6, dans lequel le module de charnière (400) comprend en outre :
un premier support de prise en charge (437) couplé au premier support de rotation (431) et au premier boîtier (101) ; et
un second support de prise en charge (447) couplé au second support de rotation (441) et au second boîtier (102).

8. Dispositif électronique (100) de la revendication 7, dans lequel l'ensemble à barres multiples (500) comprend en outre un support de prise en charge à barres multiples (542) couplé aux barres multiples (540), et
dans lequel le premier support de prise en charge (437) et le second support de prise en charge (447) sont couplés aux barres multiples (540) par l'intermédiaire du support de prise en charge à barres multiples (542).

9. Dispositif électronique (100) de la revendication 6, dans lequel l'ensemble à barres multiples (500) comprend en outre un support de prise en charge de barre centrale (532) couplé à la barre centrale (530),
dans lequel le couvercle de charnière (510) comprend en outre une zone saillante (520) faisant saillie vers une partie intérieure du dispositif électronique (100), et
dans lequel la barre centrale (530) est couplée à la zone saillante (520) par l'intermédiaire du support de prise en charge de barre centrale (532).

10. Dispositif électronique (100) de la revendication 6, dans lequel le module de charnière (400) comprend en outre un support de charnière (460) couplé à la barre centrale (530), un premier arbre de transmission (451) ayant au moins une partie logée dans le support de charnière (460), et un second arbre de transmission (461) ayant au moins une partie logée dans le support de charnière (460) et travaillant en interaction avec le premier arbre de transmission.

11. Dispositif électronique (100) de la revendication 10, dans lequel le module de charnière (400) comprend en outre :
un premier élément de montage (453) couplé au premier boîtier (101) ;
un deuxième élément de montage (463) couplé au deuxième boîtier (102) ;
un premier bras de charnière (471) configuré pour tourner autour du premier arbre de transmission (451) et relié au premier élément de montage (453) par l'intermédiaire d'une première broche coulissante (455) configurée pour coulisser dans le premier élément de montage (453) ; et
un deuxième bras de charnière (481) configuré pour tourner autour du deuxième arbre de transmission (461) et relié au deuxième élément de montage (463) par l'intermédiaire d'une deuxième broche coulissante (465) configurée pour coulisser dans le deuxième élément de montage (463).

12. Dispositif électronique (100) de la revendication 11, dans lequel le premier élément de montage (453) comprend un premier évidement de glissement (454) recevant de manière coulissante la première broche coulissante (455), et
dans lequel le second élément de montage (463) comprend un second évidement de glissement (464) recevant de manière coulissante la seconde broche coulissante (465), et dans lequel le premier évidement de glissement (454) et le second évidement de glissement (464) s'étendent le long d'une trajectoire incurvée.

13. Dispositif électronique (100) de la revendication 11, dans lequel le module de charnière (400) comprend en outre :
une paire de troisièmes éléments de came (480) comprenant une paire de trous de rotation (480c) recevant le premier arbre de transmission (451) et le second arbre de transmission (461) ; et
une pluralité d'éléments élastiques (476) configurés pour fournir une pression à la paire de troisièmes éléments de came (480),
dans lequel le premier bras de charnière (471) comprend un premier élément de came (473) recevant le premier arbre de transmission (451), et le second bras de charnière (481) comprend un second élément de came (483) recevant le second arbre de transmission (461), et dans lequel le premier élément de came (473) et le second élément de came (483) sont disposés entre la paire de troisièmes éléments de came (480).

14. Dispositif électronique (100) de l'une quelconque des revendications précédentes, dans lequel le couvercle de charnière (510) comprend :
un premier couvercle de charnière (510-1) comprenant une première surface de couvercle de charnière (510-1a) ayant le premier guide de rail incurvé (511) et le second guide de rail incurvé (521) ; et
un second couvercle de charnière (510-2) comprenant une seconde surface de couvercle de charnière (510-2a) faisant face à la première surface de couvercle de charnière (510-1a) et ayant le premier guide de rail incurvé (511) et le second guide de rail incurvé (521).

15. Dispositif électronique (100) de l'une quelconque des revendications précédentes, dans lequel l'affichage (103) comprend une zone d'affichage (240) configurée pour produire un écran et une zone inactive (250) entourant la zone d'affichage (240), et
dans lequel au moins une partie du couvercle de charnière (510) est espacée de la zone d'affichage (240) dans une direction de longueur du dispositif électronique (100) et est disposée sous la zone inactive (250).
